# EUROPEAN PATENT SPECIFICATION

(11) **EP 0 985 596 B1**
(45) Date of publication and mention of the grant of the patent: **25.10.2006**
(21) Application number: 99116634.9
(22) Date of filing: 25.08.1999
(51) Int. Cl.: B62H 5/08, B62H 5/00, B62H 5/20, B60R 25/04, B62M 23/02

(54) **Motor-driven vehicle and its card key device**
Motorfahrzeug und seine Schlüsselkarten-Einrichtung
Véhicule à moteur et son dispositif de carte-clef

(30) Priority: 09.09.1998 JP 27432098; 02.10.1998 JP 29606598
(43) Date of publication of application: 15.03.2000
(73) Proprietor: HONDA GIKEN KOGYO KABUSHIKI KAISHA, Minato-ku, Tokyo (JP)
(72) Inventor: Hatanaka, Kaoru, Wako-shi, Saitama (JP); Shimmura, Hiroyuki, Wako-shi, Saitama (JP); Nagura, Hidenori, Wako-shi, Saitama (JP)
(74) Representative: Liska, Horst

(56) References cited:
- FR-A1- 2 741 585
- JP-A- 9 071 275
- US-A- 4 805 722

## Description

The present invention relates to a motor-driven vehicle such as a motor-assisted bicycle having a detachable battery and a parking lock, which can be unlocked by an ID card, and more particularly to a motor-driven vehicle suitable for use in a rental system.

Japanese Patent Laid-open No. 9-142349 discloses a lock mechanism for a motor-assisted bicycle. The lock mechanism employs a wire lock as a packing lock that can be locked with a lock on a detachable battery.

With the above mechanical lock employed, however, the position where the battery is installed and the position of the parking lock need to be close to each other, and the parking lock needs to have a particular structure, posing limitations on the freedom with which to install the battery and the freedom with which to select the parking lock. Therefore, the versatility of lock means for being applied to various forms of motor-driven vehicles is limited. Accordingly, it is an object of the present invention to solve the above problems.

This object is achieved by a motor-driven vehicle according to claim 1.

According to a first aspect of the invention, a motor-driven vehicle having a battery lock for locking a detachable battery and a parking lock for preventing the vehicle from moving is characterized by a card reader on a vehicle body for reading information of an ID card storing identification information for permitting use of the vehicle, and an electric actuator on the vehicle body for electrically locking and unlocking the battery lock and the parking lock based on the read information, said actuator for the parking lock being energized for only predetermined periods of time.

According to a second aspect of the invention, the battery lock and said parking lock are locked manually and unlocked by the electric actuator.

According to a third aspect of the invention, the vehicle comprises a rental vehicle, the ID card being capable of storing rental information.

According to a fourth aspect of the invention, the ID card stores the vehicle No. data of the rental vehicle, ID data, date of use, and time of a rental battery.

According to the first aspect of the present invention, since the battery lock and the parking lock can be electrically locked and unlocked with the ID card, a conventional mechanical lock mechanism is unnecessary. Therefore, the battery lock and the parking lock can be provided independently of each other without being mechanically linked. The freedom with which to install the battery and the freedom with which to select the structure of the parking lock are increased, allowing the lock means to be applied to various forms of motor-driven vehicles for increased versatility.

According to the second aspect of the present invention, because the battery lock and the parking lock are unlocked by the electric actuator, they are not required to be locked using the ID card. After the motor-driven vehicle is stopped, the driver can quickly manually lock the battery lock and the parking lock without removing the ID card, and thereafter can immediately leave the motor-driven vehicle. Therefore, the motor-driven vehicle can easily be operated.

According to the third aspect of the present invention, inasmuch as rental information can be stored in the ID card, the user who has rented the motor-driven vehicle can use the motor-driven vehicle using only the ID card without any mechanical key. Consequently, the motor-driven vehicle is highly convenient for the user, and the rental service provider can easily manage the motor-driven vehicle. The motor-driven vehicle is optimum for a rental system.

According to the fourth aspect of the present invention, the ID card stores the vehicle No. data of the rental vehicle, ID data, date of use, and time of the rental battery. Therefore, the charging for the rental battery user and the maintenance of the vehicle and the battery can be performed on the basis of the ID card.

### Brief Description of the Drawings

FIG. 1 is a schematic diagram of an overall rental system according to an embodiment.
FIG. 2 is a diagram showing a basic flow of the rental system.
FIG. 3 is a memory map of an ID card.
FIG. 4 shows a permission flag written in the ID card.
FIG. 5 is a perspective view of a reception station.
FIG. 6 is a block diagram of a control system of the reception station.
FIG. 7 is a flowchart up to a renting sequence.
FIG. 8 is a view illustrative of user's hobby and taste data.
FIG. 9 is a view of an image displayed on a touch-panel display unit.
FIG. 10 is a view of an image displayed, on the touch-panel display unit.
FIG. 11 is a side elevational view of a motor-assisted bicycle for use in the rental system.
FIG. 12 is a front elevational view of a front basket with a battery installed therein.
FIG. 13 is a plan view of the front basket with the battery installed therein.
FIG. 14 is an exploded perspective view of the front basket with the battery installed therein.
FIG. 15 is a plan view of a card reader.
FIG. 16 is a side elevational view of the card reader.
FIG. 17 is a block diagram of a card key system.
FIG. 18 is a block diagram of a control system of a central processor in a motor-driven vehicle.
FIG. 19 is a flowchart of the card key system.
FIG. 20is a side elevational view of the battery.
FIG. 21 is a front elevational view, partly cut away, of the battery.
FIG. 22 is a plan view of the battery.
FIG. 23 is a view showing a structure by which the card reader 60 and a battery storage case are attached to each other.
FIG. 24 is a is a view showing in detail a structure by which the battery storage case 54 is attached with the upper band 90 and attached to a vehicle frame.
FIG. 25 is a view showing in detail the structure shown in FIG. 24.
FIG. 26 is a view showing in detail a structure of a battery lock.
FIG. 27 is a cross-sectional view showing a parking lock in detail.
FIG. 28 is a vertical cross-sectional view of a power unit of the motor-driven bicycle.
FIG. 29 is a cross-sectional view taken along line 29-29 of FIG. 28.
FIG. 30 is a cross-sectional view taken along line 30-30 of FIG. 29.
FIG. 31 is a view showing the manner in which a slider inner member and a clutch inner ring engage each other.
FIG. 32 is a block diagram of a battery exchanger 8.
FIG. 33 is a block diagram of a control system of the battery exchanger 8.
FIG. 34 is a flowchart of an operation sequence of the battery exchanger 8.
FIG. 35 is a front elevational view of the battery exchanger 8.
FIG. 36 is a right-hand side elevational view, partly cut away, of the battery exchanger 8.
FIG. 37 is a left-hand side elevational view, partly cut away, of the battery exchanger 8.
FIG. 38 is a block diagram of an arrangement for processing inherent information of batteries.
FIG. 39 is a view showing a simplified arrangement of an information storage unit on a battery.
FIG. 40 is a view showing an arrangement of a personal information storage unit on a battery.
FIG. 41 is a view showing a simplified arrangement of another battery.
FIG. 42 is a view showing the attachment of a battery according to a second embodiment.
FIG. 43 is an exploded perspective view of a battery assembly unit according to the second embodiment.
FIG. 44 is a fragmentary cross-sectional view of the battery assembly unit.
FIG. 45 is an exploded perspective view of outer covers.
FIG. 46 is a perspective view of the battery assembly unit.

### Mode for Carrying out the Invention

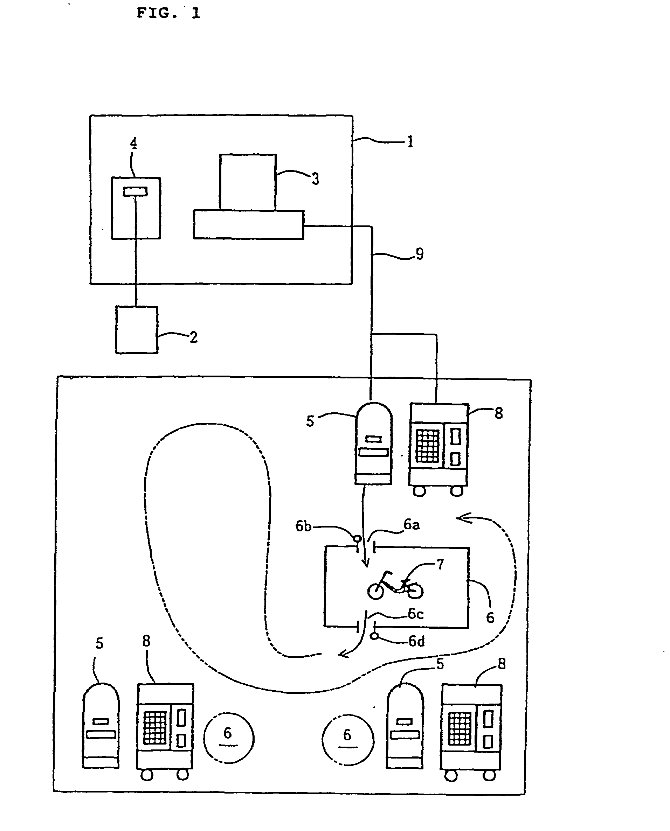

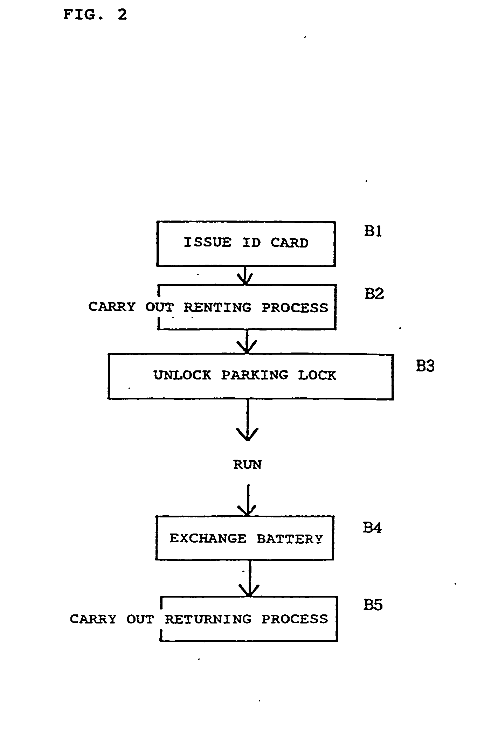

A card key system for unlocking a parking lock of a rental vehicle with an ID card to allow the vehicle to run and also for permitting a battery to be exchanged with the ID card, as applied to a rental system for motor-driven vehicles in a circuit, will be described below. First, an outline of the rental system will be described. FIG. 1 is a schematic diagram of the overall rental system, and FIG. 2 is a diagram showing a basic flow of the rental system.

As shown in FIG. 1, the rental system comprises a central management apparatus 1 for managing the system in its entirety, an ID card 2 such as an IC card or the like which is issued by the central management apparatus 1 and which stores personal information including user identification information (ID information), etc. of a user, a reception station 5 connected to the central management apparatus 1 by a communication link 9, for processing the renting and returning of a rental vehicle, a motor-driven vehicle 7 having a parking lock which can be unlocked by the ID card 2 so as to be allowed to run and also having an exchangeable battery whose lock can be unlocked by the ID card 2, and a battery exchanger 8 for exchanging a used battery for a fully charged battery based on the ID card 2.

Several reception stations 5 and battery exchangers 8 are distributed in the circuit for the convenience of users, and connected to the central management apparatus 1 by communication links 9. The central management apparatus 1 has a management computer 3 and a card issuing machine 4 for issuing the ID card 2.

Each set of the reception stations 5 and battery exchangers 8 is located at a parking lot 6 surrounded by a fence and having an entrance 6a and an exit 6b. The entrance 6a has a entrance sensor 6b, and the exit 6c has an exit sensor 6d.

FIG. 2 is a block diagram illustrating a processing flow mainly with respect to the ID card in the system. As shown in FIG. 2, the central management apparatus 1 issues an ID card 2 (B1). The user carries out a predetermined renting process including the designation of a desired vehicle type at the reception station 5 based on the ID card 2. The reception station 5 writes the vehicle type, a permission flag, etc. into the IC card 2 (B2).

Then, the user unlocks the motor-driven vehicle 7 in the parking lot 6 to allow the motor-driven vehicle 7 to run, using the ID 2 after the renting process (B3). The motor-driven vehicle 7 is unlocked by an electric actuator. The motor-driven vehicle 7 may be locked by either the electric actuator or manually. When the motor-driven vehicle 7 is unlocked, a card reader on the motor-driven vehicle 7 writes the vehicle No. into the ID card 2, and resets the permission flag.

Thereafter, the user goes out of the parking lot 6 and starts to run. In the illustrated embodiment, the rental system is assumed to be of a closed system such as a circuit whose periphery is set apart from the external environment. However, the rental system may be of a opened system.

While running or after having run, the user removes the used battery from the motor-driven vehicle 7, and exchanges it at the battery exchanger 8 using the ID card 2. At this time, the battery exchanger 8 compares the information (the user information, the vehicle No., etc.) of the ID card 2 with ID information of the battery which is read directly from the battery. If the user is recognized as a genuine user, then the battery exchanger 8 exchanges the used battery for a fully charged battery (B4).

Thereafter, the user installs the fully charged battery on the motor-driven vehicle 7, returns the electric vehicle 7 to the parking lot 6, and follows a returning procedure at the reception station 5 (B5).

When the ID card is inserted into the motor-driven vehicle 7, the rental system associates the motor-driven vehicle 7 with the IC card 2 for 1 : 1 correspondence, and allows the parking lock of the motor-driven vehicle 7 to be unlocked and the battery lock of the motor-driven vehicle 7 to be unlocked with only the IC card 2, making it possible to exchange the battery.

Consequently, the user is not required to carry a mechanical key and unlock the locks with the mechanical key. The rental system is highly convenient for the user, and is rendered simple as it does not require a conventional special management process for renting and returning keys.

Since the battery is returned after it has been fully charged, a next user can start using the motor-driven vehicle 7 immediately after having returned the motor-driven vehicle 7. Thus, using rental vehicles is highly convenient for users. Furthermore, because a plurality of reception stations 5 and battery exchangers 8 are distributed, and one common ID card 2 can be used at those reception stations 5 and battery exchangers 8, the user can loan a motor-driven vehicle, exchange the battery, and return the motor-driven vehicle at preferred locations. The user can thus find the rental system further convenient.

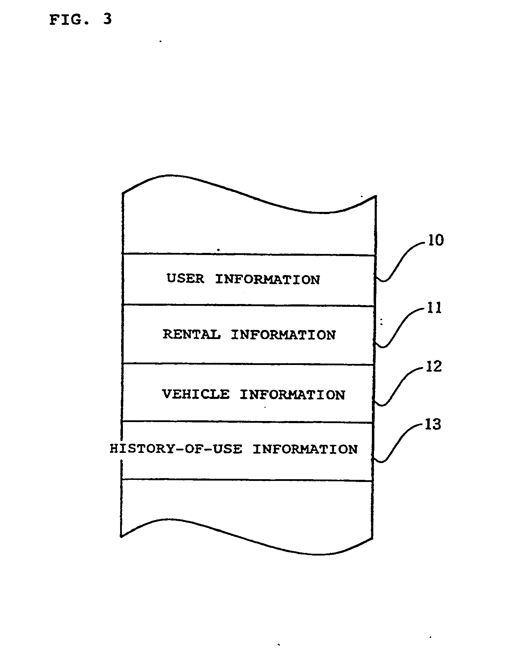

The rental system will be described in greater detail below. As indicated by a memory map shown in FIG. 3, the ID card 2 stores user information 10, rental information 11, vehicle information 12, history-of-use information 13, etc. The user information 10 includes attribute data indicative of whether the user speaks Japanese or English, a validity period in which the vehicle rental system can be used, a password, user's hobby and taste data, etc. The rental information 11 includes a flag indicative of whether the vehicle is being rented, the number of the vehicle being rented, a permission flag indicative of the types of vehicles that can be rented, etc.

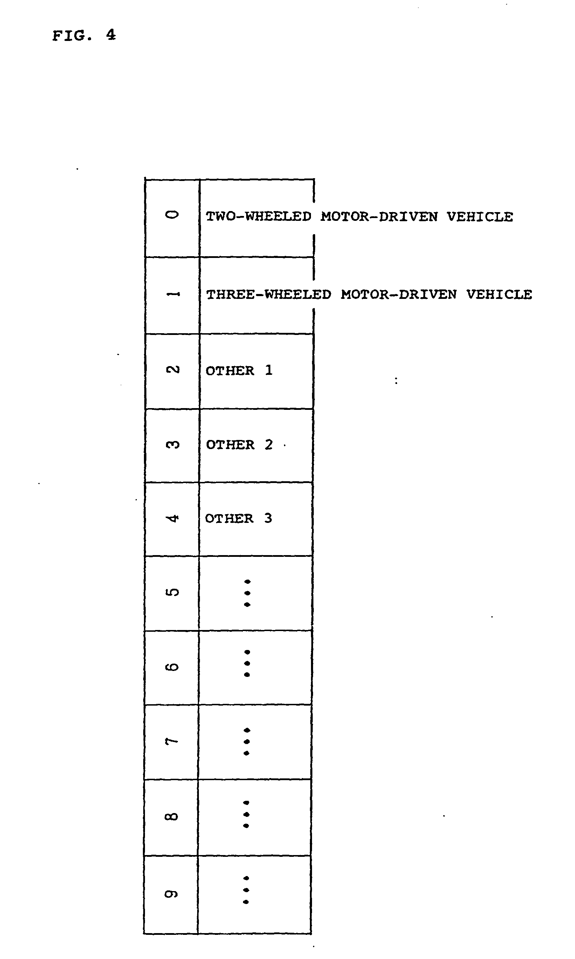

As shown in FIG. 4, the permission flag is established as a flag indicative of which of a two-wheeled motor-driven vehicle, a three-wheeled motor-driven vehicle, and other vehicles, for example, the user can loan. The vehicle information 12 includes a distance which the user has traveled up to present or a time which the user has used the vehicle up to present, and an amount of electric energy consumed by the battery in connection with the distance or time. The history-of-use information 13 includes history data relative to vehicles which the user has used in the past.

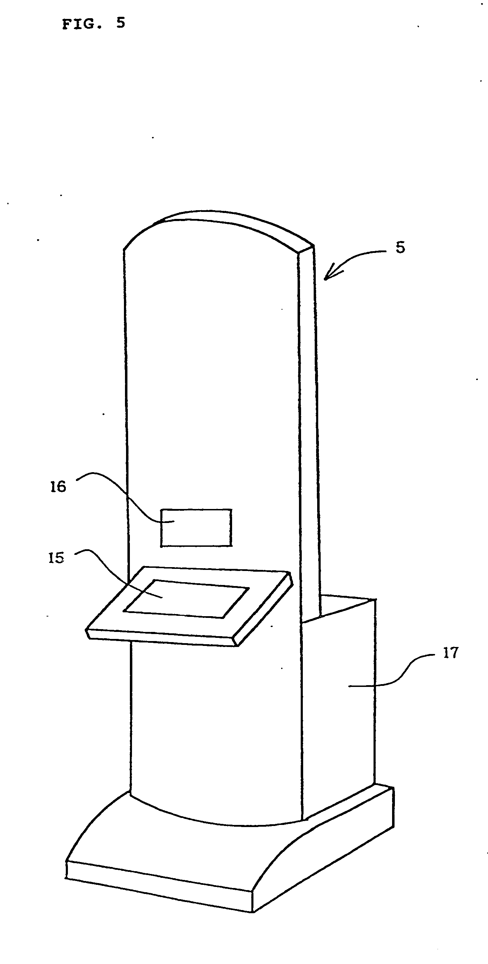

FIG. 5 shows the reception station 5. The reception station 5 has a touch-panel display unit 15 for the user to operate on for renting and returning a vehicle, an ID card reader/writer 16, and a processor housing 17.

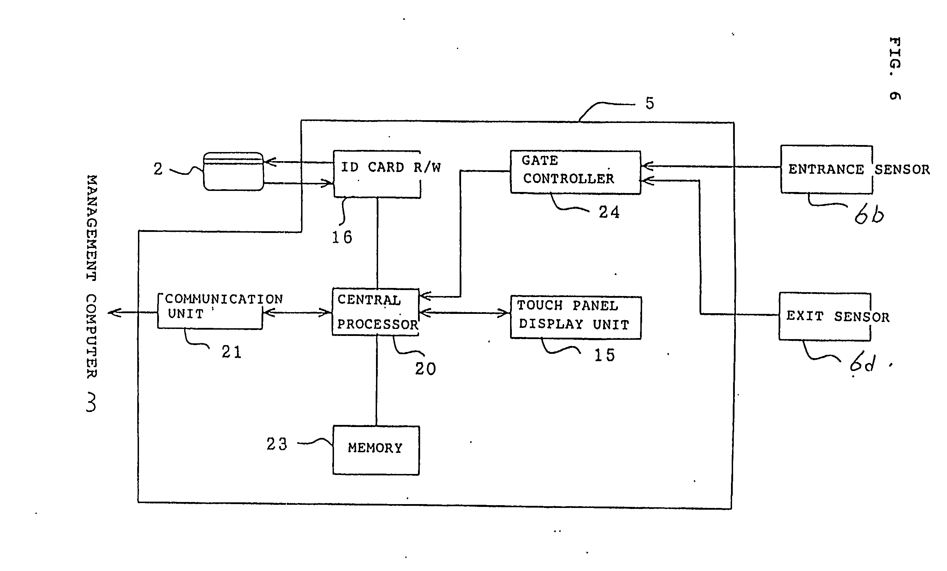

FIG. 6 is a block diagram of a control system of the reception station 5. The reception station 5 has a central processor 20 for controlling the overall reception station 5. The central processor 20 is connected to the management computer 3 of the central management apparatus 1 via a communication unit 21. The ID card reader/writer 16, a memory 23, a gate controller 24, and the touch-panel display unit 15 are connected to the central processor 20.

The memory 23 stores various data processed by the reception station 5. The gate controller 24 controls vehicles and users as they move into and out of the parking lot 6, according to signals from the entrance sensor 6b and the exit sensor 6d.

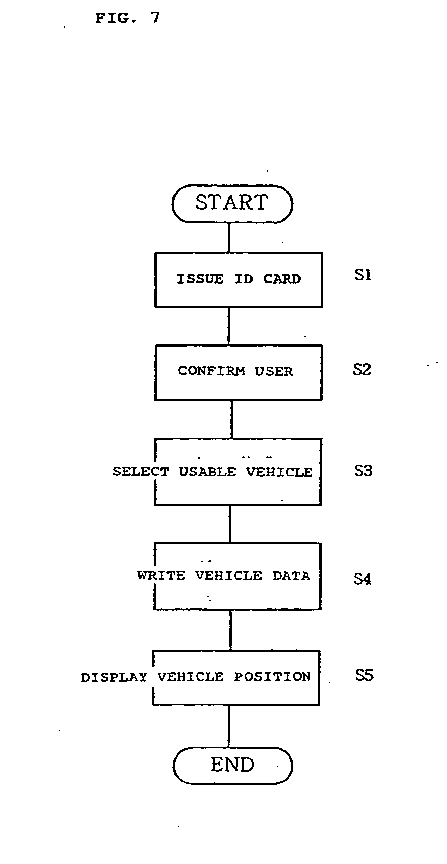

A processing sequence of the central management apparatus 1 and the reception station 5 will be described below with reference to a flowchart shown in FIG. 7. In order to use the vehicle rental system, the user registers personal information and makes a contract to use the vehicle rental system with respect to the management computer 3 of the central management apparatus 1. When the personal information is registered and the contract is made, the management computer 3 controls the ID card issuing machine 4 to issue an ID card 2 such as an IC card or the like to the user (S1).

As shown in FIG. 3, the ID card 2 has recorded therein user information 10 including attribute data indicative of whether the user speaks Japanese or English, a validity period in which the vehicle rental system can be used, a password, user's hobby and taste data, etc. and rental information 11 including a permission flag (FIG. 4) indicative of the types of vehicles that can be rented which the user desires.

The user's hobby and taste data may include, for example, data representing the color and shape of a vehicle, the height of the saddle and the size of the wheels if the vehicle is a two-wheeled motor-driven vehicle, etc. The permission flag may be a flag, for example, which is set to prevent the user from using a vehicle that requires a driver's license for driving if the user does not carry a driver's license.

These items of information may be orally supplied from the user, or put down on a sheet of paper by the user, and then entered by the operator. Alternatively, information stored in a credit card of the user may be copied in order to avoid errors which would otherwise tend to occur in entering information.

Then, the user who carries the ID card 2 uses the reception station 5 at the parking lot 6 to rent a vehicle. When the user places the ID card 2 on or inserts the ID card into the ID card reader/writer 16 of the reception station 5, the ID card reader/writer 16 reads the user information 10, the rental information 11, the vehicle information 12, and the history-of-use information 13 from the ID card 12, and transfers the read information to the central processor 20.

From the read information, the central processor 20 decides whether the user is a person who can use the vehicle rental system or not. If the central processor 20 determines that the user is a person who can use the vehicle rental system (S2), then the central processor 20 selects vehicles that can be used by the user based on inventory information of the vehicles in the parking lot 6, and displays the selected vehicles on the touch-panel display unit 15 (S3). The touch-panel display unit 15 displays the selected vehicles in English or Japanese according to the attribute data of the user information 10.

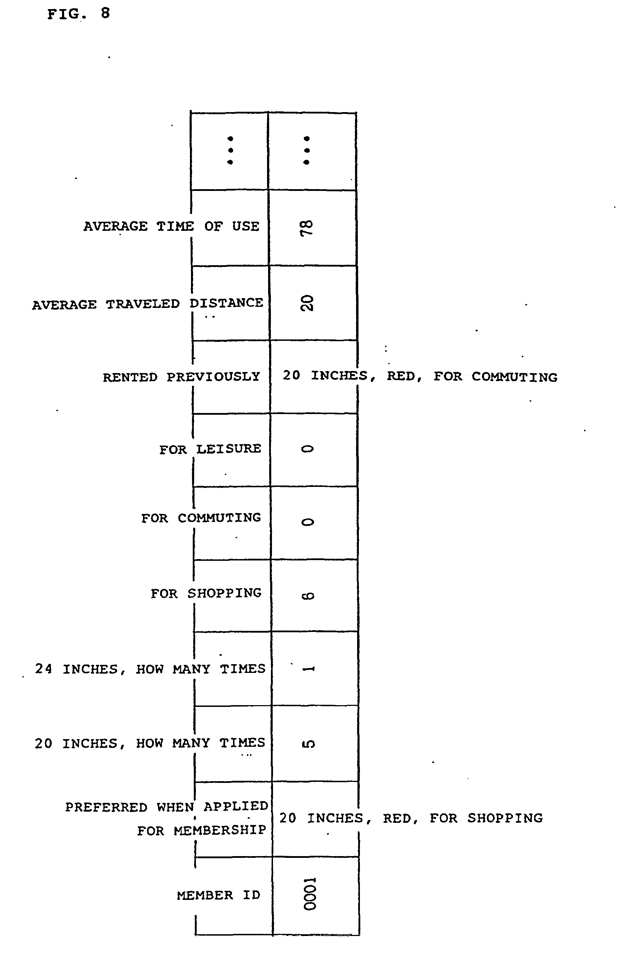

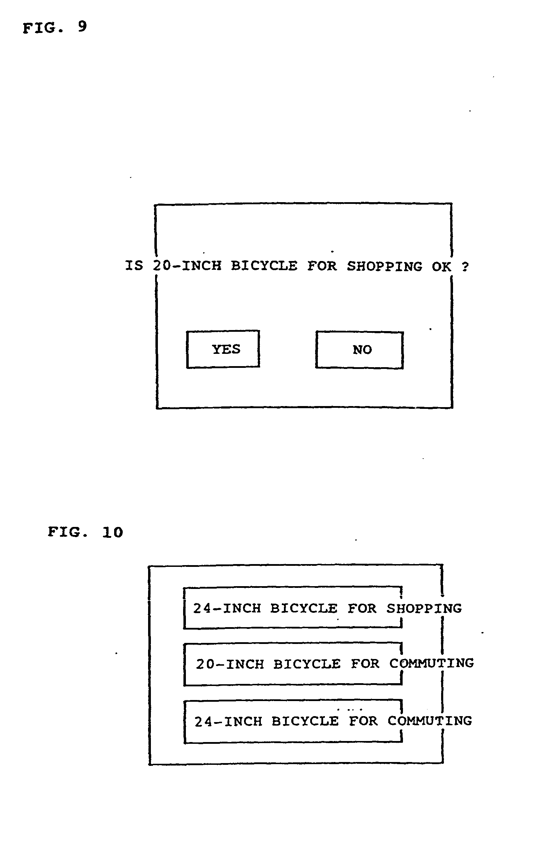

If the user's hobby and taste data obtained from the ID card 2 are as shown in FIG. 8, for example, then the touch-panel display unit 15 displays an image shown in FIG. 9 based on the user's hobby and taste data. If the user selects "NO", then the touch-panel display unit 15 displays an image shown in FIG. 10 for the user to select other vehicles.

If the user does not carry a driver's license, any image for selecting vehicle types requiring a driver's license, such as a four-wheeled motor-driven vehicle, is not displayed according to the permission flag shown in FIG. 4. Since only information necessary for the user is selected and displayed on the touch-panel display unit 15, the user can efficiently select a vehicle.

If the user selects a desired vehicle, the central processor 20 writes vehicle type information as data relative to the type of the selected vehicle into the ID card 2 (S4). When the vehicle type information is written in the ID card 2, the central processor 20 displays a location in the parking lot 6 of the corresponding vehicle on the touch-panel display unit 15 (S5). The renting process now comes to an end.

The user with the ID card 2 then enters the parking lot 6 from the entrance 6a, and goes to the corresponding vehicle. At this time, the entrance sensor 6b at the entrance 6a detects the entry of the user with the ID card 2 into the parking lot 6, and transfers the entry information via the gate controller 24 to the central controller 20.

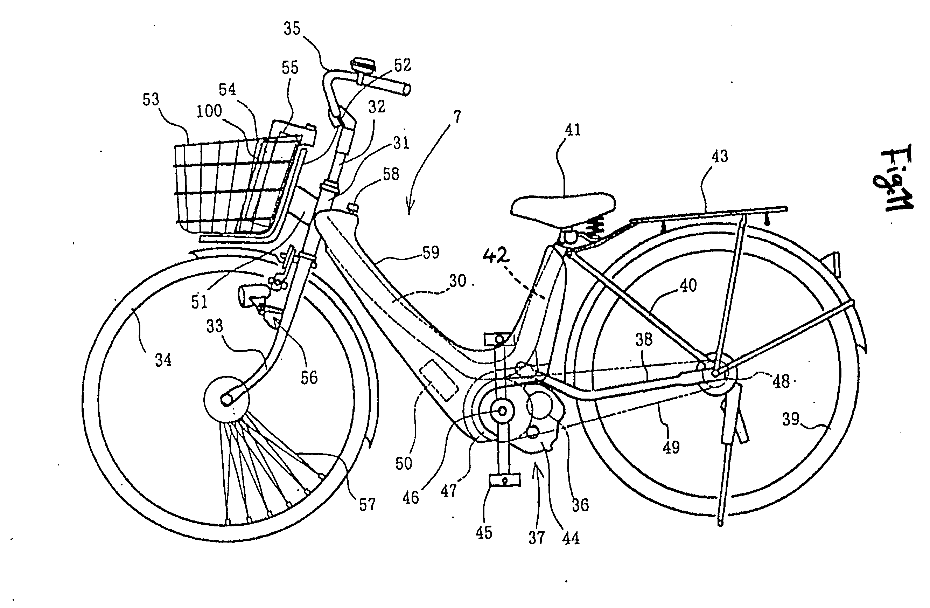

A motor-assisted bicycle as an example of the two-wheeled motor-driven vehicle 7 used in the rental system of the present invention will be described below. As shown in FIG. 11, the motor-assisted bicycle has a vehicle frame 30 which is substantially U-shaped as viewed in side elevation, a front fork 33 integrally mounted on a lower end of a handle post 32 which is rotatably supported by a head pipe 31 on a front end of the vehicle frame 30, a front wheel 34 mounted on a lower end of the front fork 33 by a shaft, and a handle 35 mounted on an upper end of the handle post 32.

A power unit 37 having a power assisting motor 36 is mounted on a lower portion of the vehicle frame 30. A rear wheel 39 is supported by a shaft between a pair of laterally spaced members of a rear fork 38 that extends rearwardly from the vehicle frame 30 rearwardly and upwardly of the power unit 37. A pair of laterally spaced stays 40 extends between the rear fork 38 and the vehicle frame 30.

A seat post 42 with a saddle seat 41 mounted on an upper end thereof is mounted on a rear portion of the vehicle frame 30 with the saddle seat 41 being adjustable in vertical position. A carrier 43 is fixedly positioned rearwardly of the saddle seat 41.

The power unit 37 has a casing 44 by which there is rotatably supported a crankshaft 46 having pedals 45 on its opposite ends. A chain 49 is trained around a drive sprocket 47 to which drive forces can be transferred from the crankshaft 46 and assistive forces can also act from the power assisting motor 36, and a driven sprocket 48 mounted on the shaft of the rear wheel 39.

The power assisting motor 36 is controlled by an assistance controller 50 fixedly supported on a lower portion of the vehicle frame 30 forwardly of the power unit 37. The assistance controller 50 is controlled in its operation based on the rotational speed of the power assisting motor 36 and the input torque from the pedals 32.

A front basket 53 is attached to the head pipe 31 by a bracket 51 and a carrier frame 52 mounted on a distal end of the bracket 51 and having an L shape as viewed in side elevation. A battery storage case 54 is housed in the front basket 53 and mounted on a rear surface of the front basket 53. The front basket 53 is attached to the carrier frame 52.

A battery 55 for supplying electric energy to the power assisting motor 36 is removably housed in the battery storage case 54. A parking lock 56 is mounted on the front fork 33 on a side of the front wheel 34. When the parking lock 56 is locked, the parking lock 56 engages with a spoke 57 of the front wheel 34 to make the front wheel 34 nonrotatable.

A main switch 58 for supplying electric motor from the battery 55 to the assistance controller 50, the power assisting motor 36, a battery lock (described later on), and the parking lock 56 is disposed on an upper portion of a cover 59 which covers a substantial portion of the vehicle frame 30.

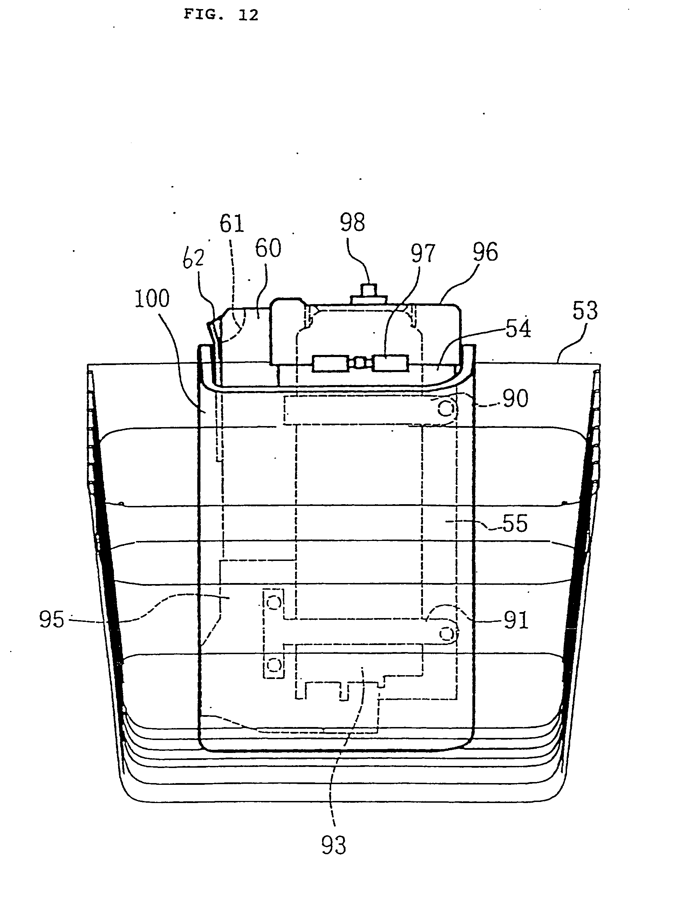

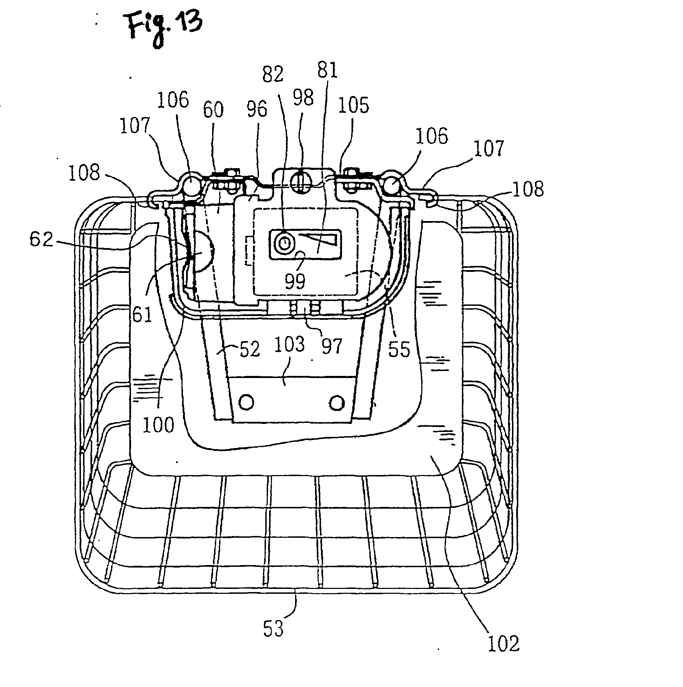

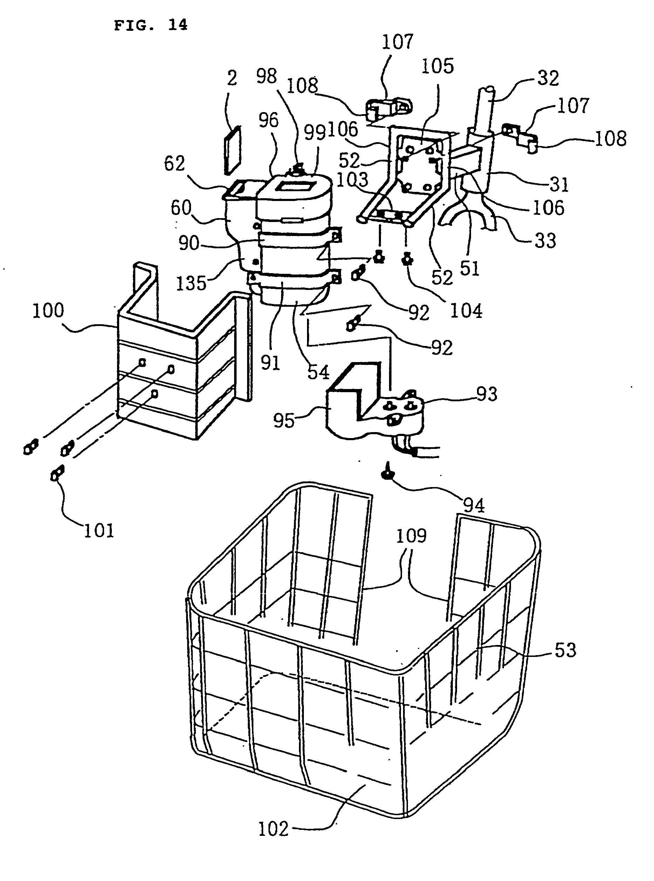

FIG. 12 is a front elevational view of the front basket 53 with the battery storage case 54. FIG. 13 is a plan view of the front basket 53 with the battery storage case 54. FIG. 14 is an exploded perspective view of the front basket 53 with the battery storage case 54. As shown in FIGS. 12 through 14, a card reader 60 for inserting the ID card 2 therein is mounted on a side of the battery storage case 54.

A battery lock (described later on) is integrally mounted on the card reader 60 for locking the battery 55 against removal unless a certain condition is satisfied. The unlocking of the battery lock and the parking lock 56 and the supply of electric energy to the assistance controller 50 are controlled by the card reader 60.

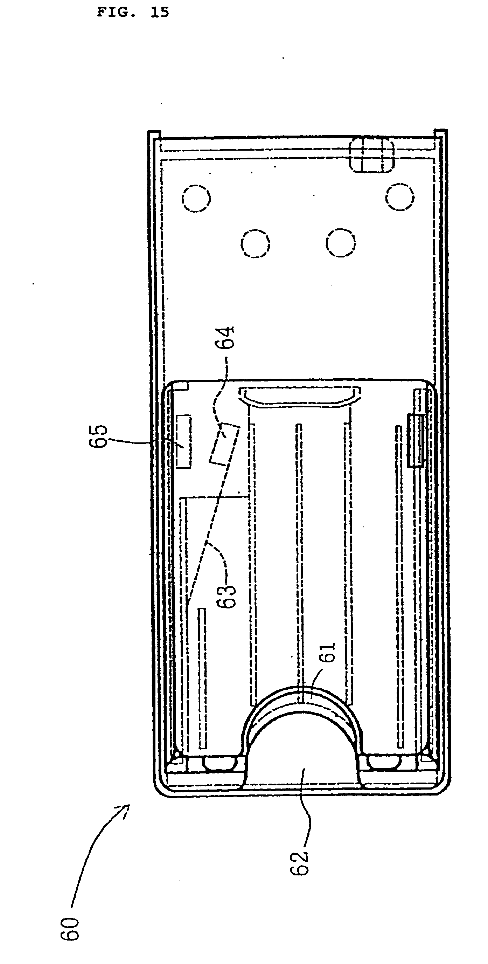

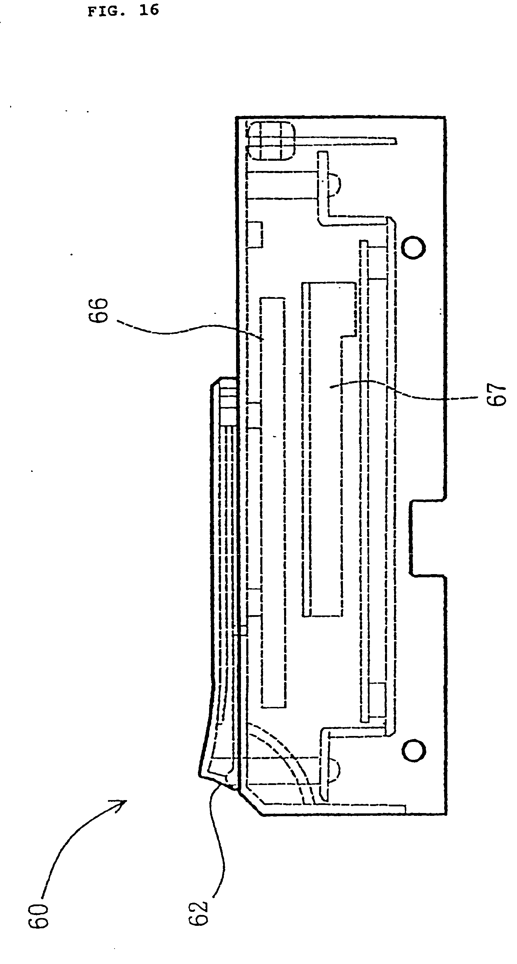

FIG. 15 is a plan view of the card reader 60, and FIG. 16 is a side elevational view of the card reader 60. As shown in FIGS. 15 and 16, the card reader 60 has a card slot 62 defined in an end thereof and having a recess 61 for allowing the ID card 2 to be easily brought into and out of the card reader 60. The card reader 60 houses therein a magnet 64 mounted on a tip end of a leaf spring 63 which is elastically deformable by insertion of the ID card 2, and a card insertion switch 65 comprising a Hall device which is turned on when the magnet 64 is displaced closely to the card insertion switch 65. An antenna 66 is disposed near and parallel to the card slot 62, for receiving information stored in the ID card 2 and supplying the information to a central processor 67.

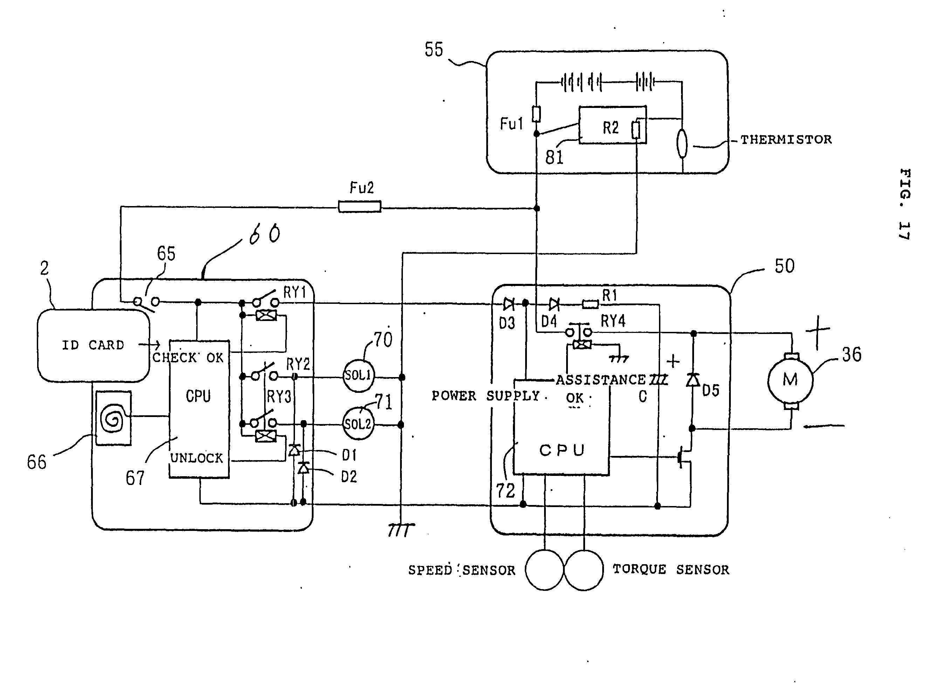

FIG. 17 is a block diagram of a card key system. The card key system comprises the battery 55, the ID card 2, the card reader 60, and the assistance controller 50. The card reader 60 has the card insertion switch 65 which is mechanically turned on when the ID card 2 is inserted into the card slot 62, and has a break contact connected to a positive terminal of the battery 55 via fuses Fu1, Fu2.

The card insertion switch 65 has a make contact connected to the central processor 67 for supplying electric energy thereto, and connected in common to relays RY1, RY2, RY3. The relay RY1 is controlled by the central processor 67 for controlling electric energy supplied to a central processor 72 in the assistance controller 50.

The relays RY2, RY3 are controlled by the central processor 67 for controlling a battery lock solenoid 70 and a parking lock solenoid 71 in ganged relation. The solenoids 70, 71 have respective input terminals connected to a ground line of the central processor 67 via respective diodes D1, D2.

The antenna 66 is connected to the central processor 67. When the ID card 2 is inserted into the card slot 62, the card insertion switch 65 is turned on to supply electric energy to the central processor 67, and the central processor 67 reads ID information from the ID card 2 via the antenna 66. If the ID information is compared with data and found acceptable, then the central processor 67 turns on the relays RY2, RY3 in ganged relation to energize the battery lock solenoid 70 and the parking lock solenoid 71 for respective predetermined periods of time for removing and exchanging the battery 55 and unlocking the parking lock 56.

The assistance controller 50 has a relay RY4 connected between the positive terminals of the battery 55 and the power assisting motor 36 and controlled by the central processor 72. The central processor 72 is supplied with signals from a speed sensor and a torque sensor. When the central processor 72 permits power assistance to be started based on these signals, the central processor 72 turns on the relay RY4 to supply electric energy to the power assisting motor 36.

A commutation diode D5 is connected parallel to the power assisting motor 36 and has an anode connected to the negative terminal of the power assisting motor 36. A TFT transistor with one terminal grounded is connected to the negative terminal of the power assisting motor 36. The central processor 72 controls the TFT transistor to control the duty cycle of the power assisting motor 36.

The relay RY1 has a make contact to which diodes D3, D4, a current limiting resistor R1, and a smoothing capacitor C are connected in series.

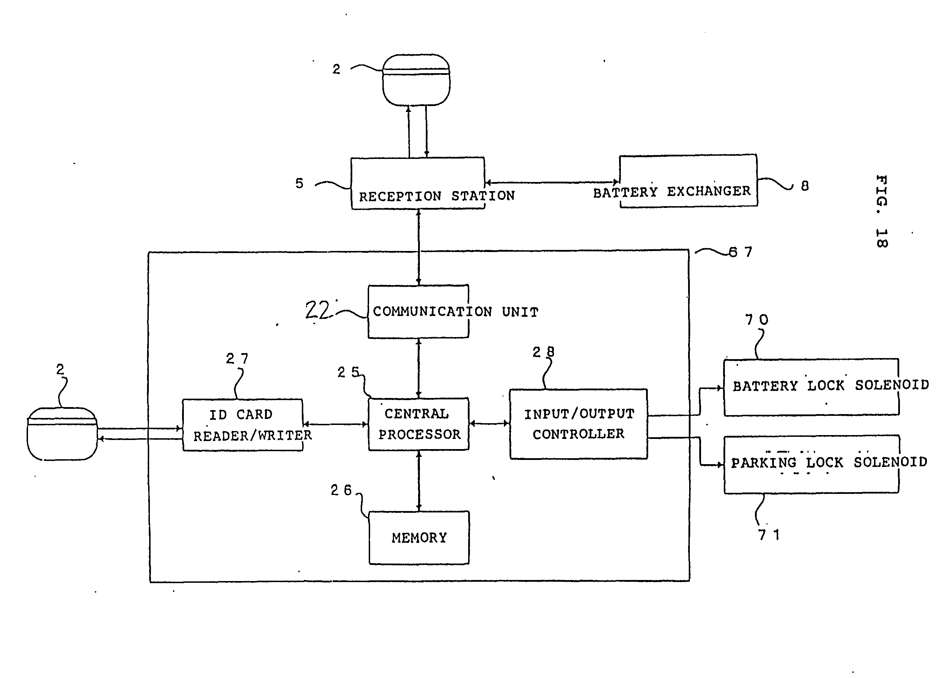

FIG. 18 is a block diagram of a control system of the central processor 67 in the card reader 60 of the motor-driven vehicle 7. The central processor 67 comprises a communication unit 22 for sending information to and receiving information from the reception station 5, a central processor 25, a memory 26 for storing various processed data, an ID card reader/writer 27 for reading information from the ID card 2 and writing information into the ID card 2 from the vehicle, and an input/output controller 28. The battery lock solenoid 70 and the parking lock solenoid 71 are connected to the input/output controller 28.

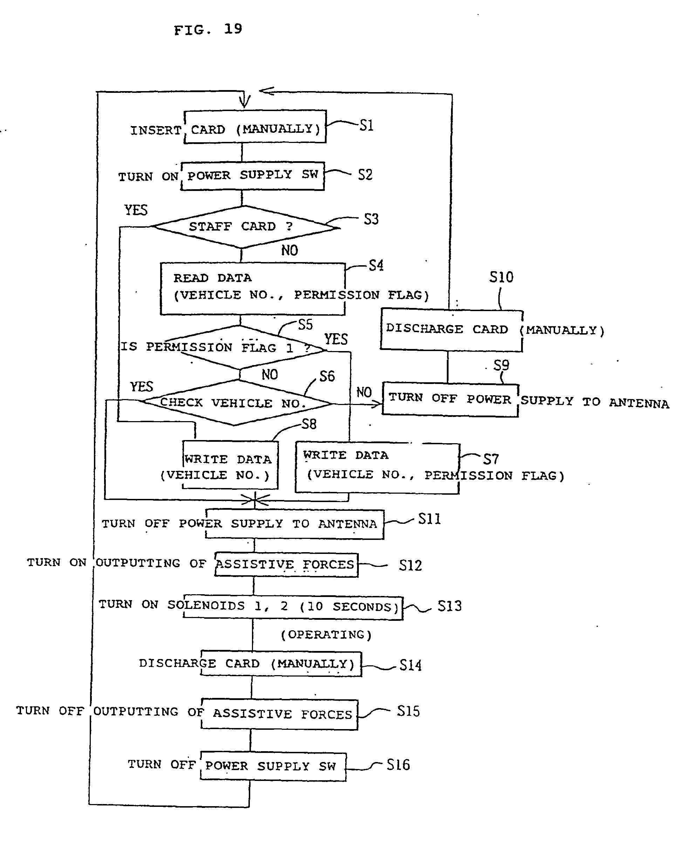

A flowchart of the card key system will be described below with reference to FIG. 19. When the ID card 2 is manually inserted into the card slot 62 in the card reader 60 (S1), the card insertion switch 65 which is a power supply switch of the card reader 60 is mechanically turned on to start supplying electric energy to the central processor 67 (S2).

Thereafter, the central processor 67 decides whether the ID card 2 is a staff card or not, i.e., whether the ID card 2 is a card of an employee of the rental system or not, via the antenna 66 (S3). If the ID card 2 is a staff card, then control jumps to S8. If ID card 2 is not a staff card, then the central processor 67 further reads stored information from the ID card 2, and compares the vehicle type and the permission flag with stored data for judging whether to permit the user to ride on the vehicle (S4).

Conditions to permit the user to ride on the vehicle are satisfied when the permission flag is set (1) and a vehicle type flag or a vehicle No. is in agreement. The central processor 67 decides whether the permission flag is set (1) or not (S5). If the user rides on the vehicle for the first time when the vehicle type is in agreement, then since the permission flag is set (Yes), control goes to S7 in which the central processor 67 overwrites the data of the vehicle No. from the vehicle, and resets the permission flag.

If the permission flag is not set, e.g., if the user rides on the vehicle again after haying removed the ID card to take a rest, for example, then the central processor 67 compares the vehicle No. (S6). If the vehicle No. is in agreement, then since the user is a genuine user, the central processor 67 does not write data, and control goes to S11. If the vehicle No. is not in agreement, then since there is a possibility of unauthorized use of the ID card, the central processor 67 turns off the power supply of the antenna 66 and cancels a subsequent process such as unlocking (S9). The central processor 67 allows the ID card to be manually discharged (S10), after which control returns to the start of the sequence.

In S11, the central processor 67 turns off the power supply of the antenna 66. The central processor 67 turns on the output of assistive forces (S12). Thereafter, the central processor 67 turns on the battery lock solenoid 70 and the parking lock solenoid 71 for a predetermined period of time, i.e., 10 seconds or shorter (S13).

While the battery lock solenoid 70 and the parking lock solenoid 71 are being turned on, the user can remove and exchange the battery 55, or can unlock the parking lock 56 to start running. If nothing has been done for the predetermined period of time, then since the battery 55 cannot be exchanged and the parking lock 56 cannot be unlocked, the sequence needs to be started over again if the battery 55 should be exchanged and the parking lock 56 should be unlocked. Inasmuch as the electric energy for unlocking the locks is only required for the predetermined period of time, the power consumption by the battery is suppressed.

If the locks can be unlocked, then the motor-driven vehicle 7 and the ID card 2 are associated for 1 : 1 correspondence, and the motor-driven vehicle 7 runs with the ID card 2 inserted. If the battery is used up while the motor-driven vehicle 7 is running, then the battery can be exchanged for a fully charged battery as described later on.

When the driving of the motor-driven vehicle 7 is over, the user manually discharges the ID card 2 (S14), turning off the power supply of the central processor 72 of the assistance controller 50. The output of assistive forces is turned off (S15), and the power supply of the card reader 60 is turned off (S16), after which control returns to the initial state. Subsequently, the user exchanges the battery and returns the motor-driven vehicle, as described later on.

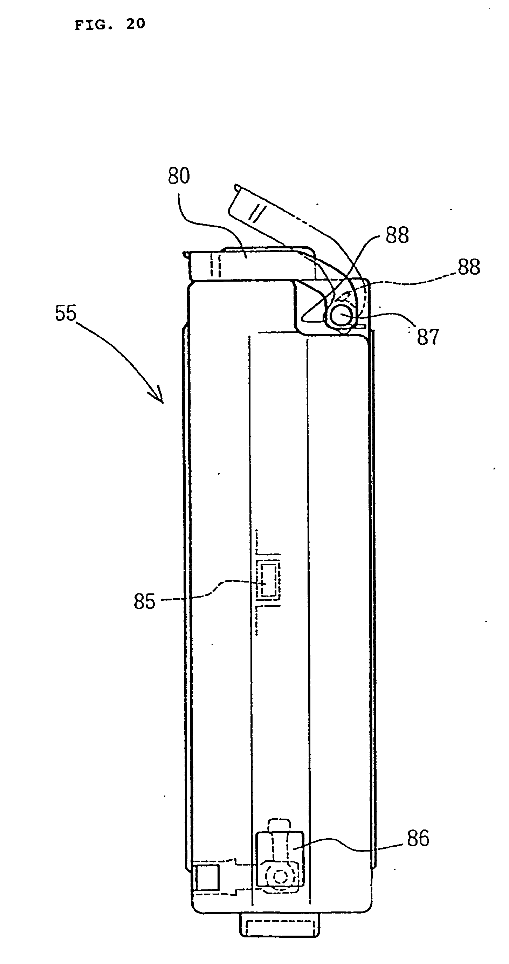

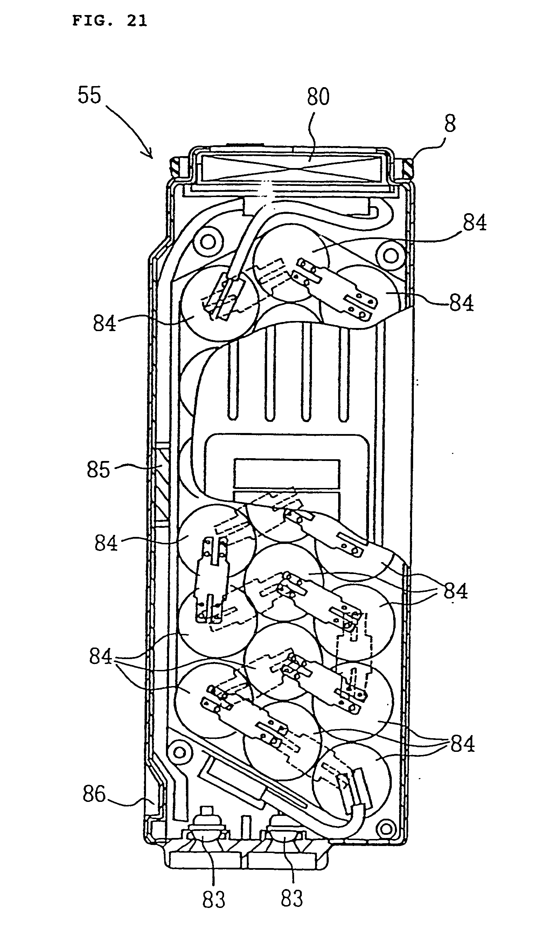

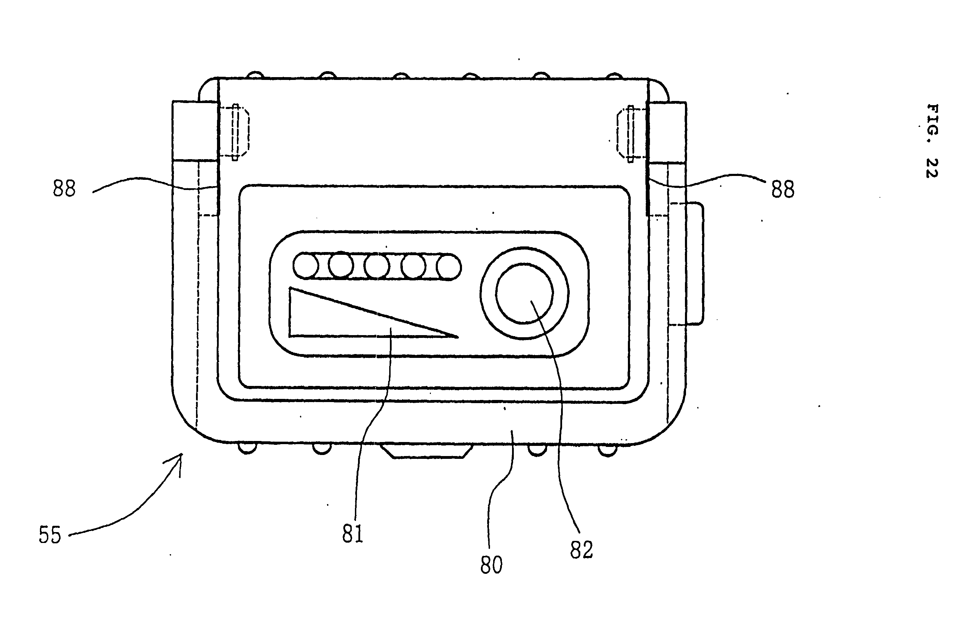

FIGS. 20 - 22 show details of the battery 55. FIG. 20 is a side elevational view of the battery 55, FIG. 21 is a front elevational view, partly cut away, of the battery 55, and FIG. 22 is a plan view of the battery 55. The battery 55 is substantially in the form of a rectangular parallelepiped. The battery 55 has a handle 80 angularly movable about a shaft 87 near a corner of a longitudinal end thereof. The handle 80 is normally biased by a coil spring 88 so as to be pressed against an upper surface of the end of the battery 55.

The battery 55 has a remaining energy indicator 81 on the end thereof on which the handle 80 is mounted. The remaining energy indicator 81 indicates a remaining amount of stored energy when a push button 82 is pressed. Electrodes 83 are mounted on the opposite longitudinal end of the battery 55 for connection to a connector (described later on). The battery 55 comprises a number of unit chargeable cells represented by reference numeral 84 connected together into a cell assembly. An information chip 85 storing inherent information of the battery 55 such as ID information thereof is disposed centrally in a side of the battery 55. The battery 55 has a locking recess 86 defined in a lower portion of the side thereof.

A detailed structure of the motor-driven vehicle 7 will be described below. In FIGS. 12 through 14, the battery storage case 54 and the card reader 60 make up an integral unit, and the battery storage case 54 is integrally joined to the card reader 60 by an upper band 90 and a lower band 91. A terminal unit 93 is fastened to a bottom of the battery case 54 by screws 94 and has a solenoid cover 95 projecting therefrom and covering the solenoid of the battery lock integral with the card reader 60.

The battery storage case 56 has an upper portion covered with a lid 96 having an end connected to the battery storage case 54 by a hinge 97. The lid 96 can be freely opened and closed by operating a knob 98 on the other end of the lid 96. The battery unit is covered with a unit cover 100 on its front area which is directly attached to a side of the battery storage case 54 by screws 101. As shown in FIG. 13, the lid 96 has an inspection window 99 defined centrally therein for observing the remaining energy indicator 81 and pressing the push button 82 therethrough.

The basket 53 has a bottom plate 102 which is superposed on a cross plate 103 on the carrier frame 52 and fixed to the carrier frame 52 by bolts 104 threaded upwardly. The carrier frame 52 is substantially L-shaped as viewed in side elevation, and includes a vertical upper frame 106 with an attachment plate 105 supported thereby.

Engaging pieces 107 have ends bolted to lateral sides of the upper frame 106 and opposite ends shaped into hooks 108 engaging vertical wires 109 of the basket 53 for thereby fixing an upper portion of the basket 53. As shown in FIGS. 12 and 13, the battery unit as a whole is of a vertically elongate structure extending along and attached to the rear surface of the basket 53, and does not substantially limit the capacity of the basket 53.

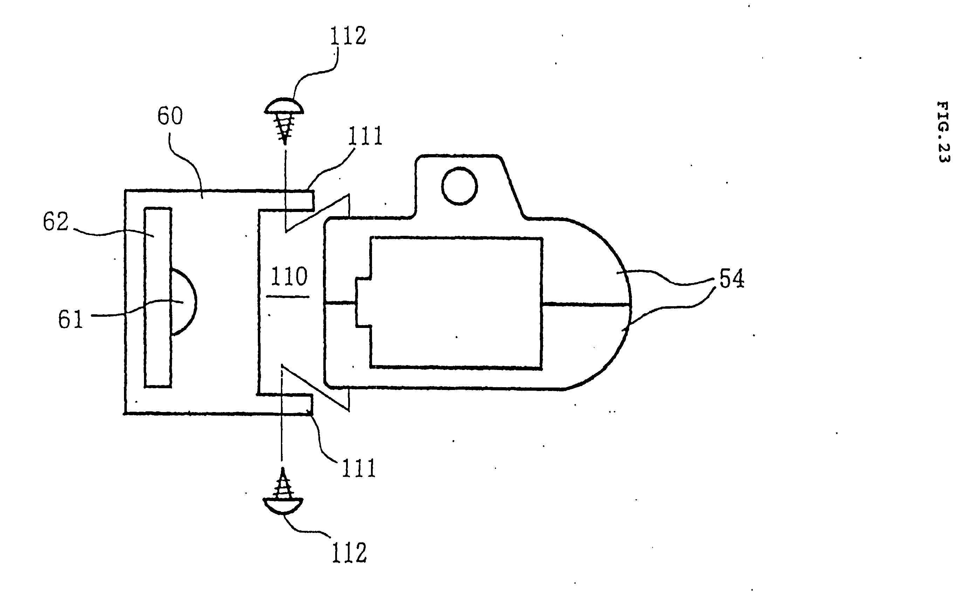

FIG. 23 is a view showing a structure by which the card reader 60 and the basket 53 are attached to each other. Meanwhile, the battery storage case 54 is divided into two components that mate with each other in the fore-and-aft direction. The card reader 60 has an attachment surface with a recess 110 defined therein for fitting over one side of the battery storage case 54 that has been combined in the fore-and-aft direction. The card reader 60 also has front and rear edges 111 alongside of the recess 110, which are superposed on front and rear wall surfaces of the battery storage case 54 and fastened thereto by screws 112. The divided components of the battery storage case 54 can thus efficiently be combined with each other when the card reader 60 is attached thereto.

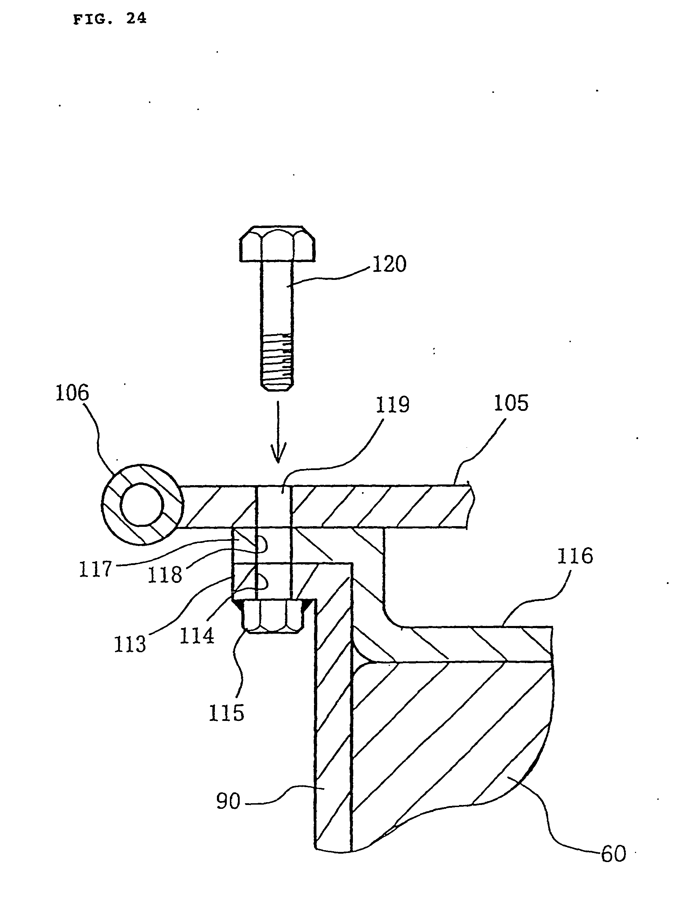

FIG. 24 is a view showing in detail a structure by which the battery storage case 54 is attached with the upper band 90. The upper band 90 has a bent end 113 disposed near the card reader 60 and having a through hole 114 and a welded nut 115. The bent end 113 is superposed on a bent end 117 of a rear upper band 116 which is held against the rear surface of the battery storage case 54 other than the upper band 90. The bent end 117 has a through hole 118 that is aligned with a through hole 119 defined in the attachment plate 105. A bolt 120 is inserted from behind through these holes and threaded into the welded nut 115 thereby combining the bent ends integrally together. An opposite end of the upper band 90 is of the same structure as the lower band 91, and will be described later on with respect to the lower band 91.

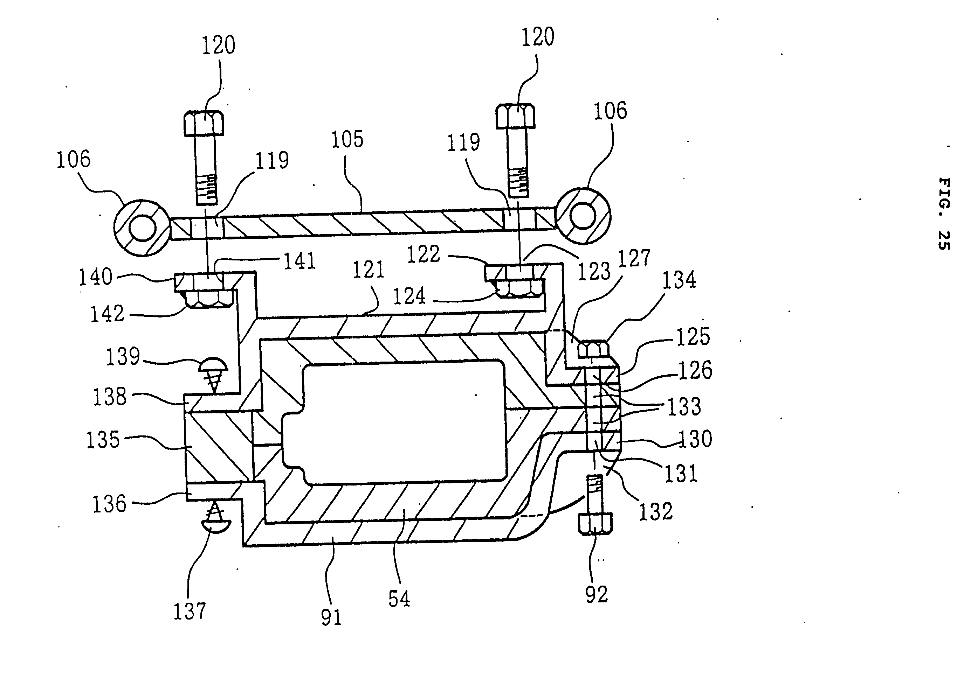

FIG. 25 is a view showing in detail a structure by which the battery storage case 54 is attached with the lower band 91. A rear lower band 121 is held against the rear surface of the battery storage case 54 and has one side bent into a cross-sectionally crank-shaped portion bent in opposite directions. The crank-shaped portion includes a portion having an attachment leg 122 bent at a right angle toward the attachment plate 105 and having a through hole 123 and a welded nut 124. The through hole 123 is aligned with a through hole 119 in the attachment plate 105. The attachment leg 112 is fixed to the attachment plate 105 by a bolt 120 inserted from behind through the holes 119, 123 and threaded into the welded nut 124.

The other portion of the crank-shaped portion has an attachment end 125 bent in the direction opposite to the attachment leg 122 and having a through hole 126. The attachment end 125 is disposed in a recess 127 defined in a side of the battery storage case 54. The lower band 91 has an end 130 bent similarly in a recess 132 defined in the battery storage case 54 and having a through hole 131. The through holes 126, 131 are aligned with through holes 133 defined in an edge of the battery storage case 54, and a bolt 92 is inserted from a front side into these holes and threaded into a nut 134 on a rear side. This attachment structure is the same as the attachment structure of the upper band 90 on the same side.

The lower band 91 has an opposite end 136 superposed on a side of a lock 135 integrally formed with a lower portion of the card reader 60, and fastened thereto by a screw 137. The end on the same side of the rear lower band 121 has a substantially channel shape including an attachment portion 138 superposed on the other side of the lock 135 and fastened thereto by a screw 139, and a bent portion 140 projecting toward the attachment plate 105 having a through hole 141 and a welded nut 142. The through hole 141 is aligned with a through hole 119 in the attachment plate 105, and a bolt 120 is inserted through the holes 141, 119 and threaded into the welded nut 142 to be fastened.

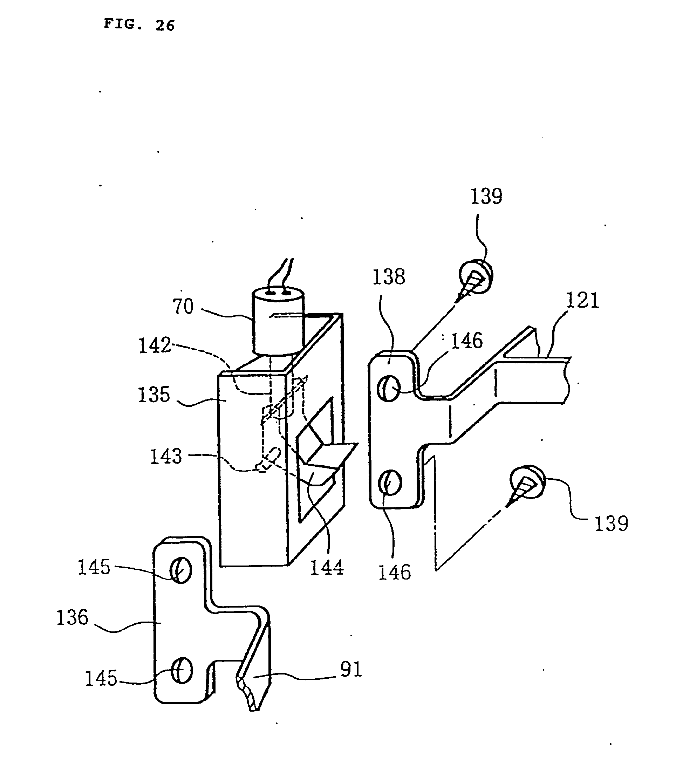

FIG. 26 is a view showing in detail a structure of a lock 135 serving as the battery lock. The battery lock solenoid 70 is mounted on the lock 135. The battery lock solenoid 70 normally lifts an actuator rod 142 to turn a lock finger 144 counterclockwise (FIG. 26) about a shaft 143 through a hole (not shown) defined in a side of the battery storage case 54 into the locking recess 86 (FIGS. 20 and 21) in the side of the battery 55 for thereby locking the battery 55 against removal.

The reference numerals 145, 146 represent through holes defined in the end 136 of the lower band 91 and holes defined in the attachment portion 138 of the rear lower band 121. Since the lock 135 is directly attached to the lower band 91 and the rear lower band 121, the lock 135 is firmly attached to the carrier frame 52 of the vehicle frame.

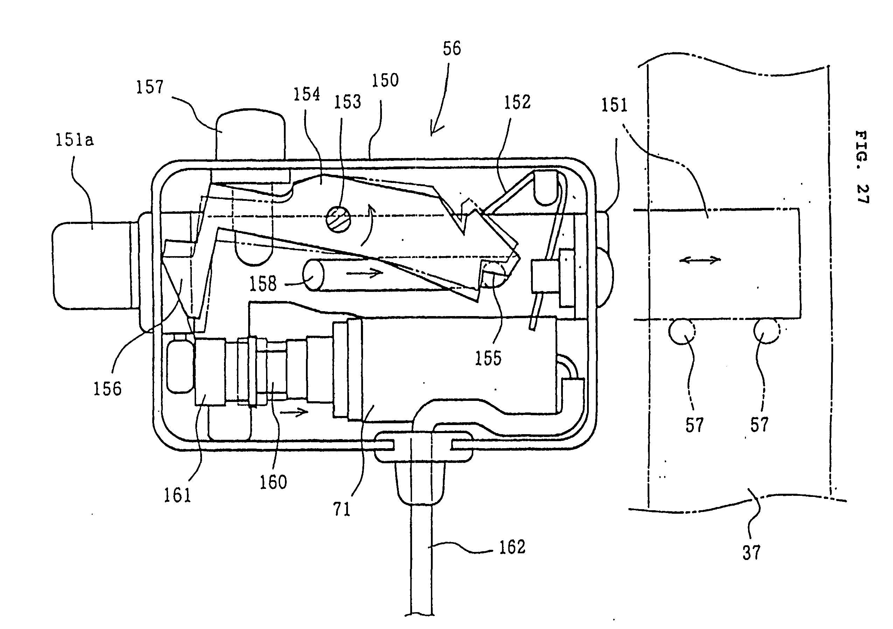

FIG. 27 is a cross-sectional view showing details of the parking lock 56. The parking lock 56 has a lock rod 151 movable into and out of a case 150 and normally biased to a retracted position (the solid-line position away from the front wheel 37, the imaginary-line position being a projected position) by a spring 152.

A lock plate 154 is angularly movable about a shaft 153 and has an engaging recess 155 defined in an end thereof and a stop projection 156 disposed on the other end thereof. The stop projection 156 can be pushed by a push button 157 that is supported on the case 150 so as to be movable into and out of the case 150.

When an actuator rod 160 of the parking lock solenoid 71 disposed in the case 150 is projected (as shown by the solid lines), the stop projection 156 abuts against a stop end 161 of the actuator rod 160 and cannot be angularly moved to a large extent. The parking lock solenoid 71 is connected to the card reader 60 by an electric cable 162 so as to be controlled thereby.

The lock rod 151 has a lock pin 158 movable therewith when the lock rod 151 is pushed in. When the lock rod 151 is pushed until its distal end projects to a position in engagement with a spoke 57 of the front wheel 37, the lock pin 158 engages in the engaging recess 155 as indicated by the imaginary lines for preventing the lock rod 151 from returning.

Therefore, when the lock rod 151 is pushed in to cause the lock pin 158 to engage in the engaging recess 155, a locked state is achieved. The lock rod 151 is moved forward into abutment against a spoke 57 of the front wheel 37, thus preventing the front wheel 37 from rotating. In addition, the lock rod 151 has a foldable manually operable end 151a which is folded when the parking lock 56 is unlocked.

When the ID card 2 is inserted into the card reader 60, the parking rod solenoid 71 is energized to retract the actuator rod 160. When the push button 157 is pushed in, the stop projecting 156 is moved to a large extent, turning the lock plate 154 counterclockwise about the shaft 153, whereupon the engaging recess 155 is released from the lock pin 158. The lock rod 151 is now freed and pushed back by the spring 152, and the parking lock 56 is unlocked.

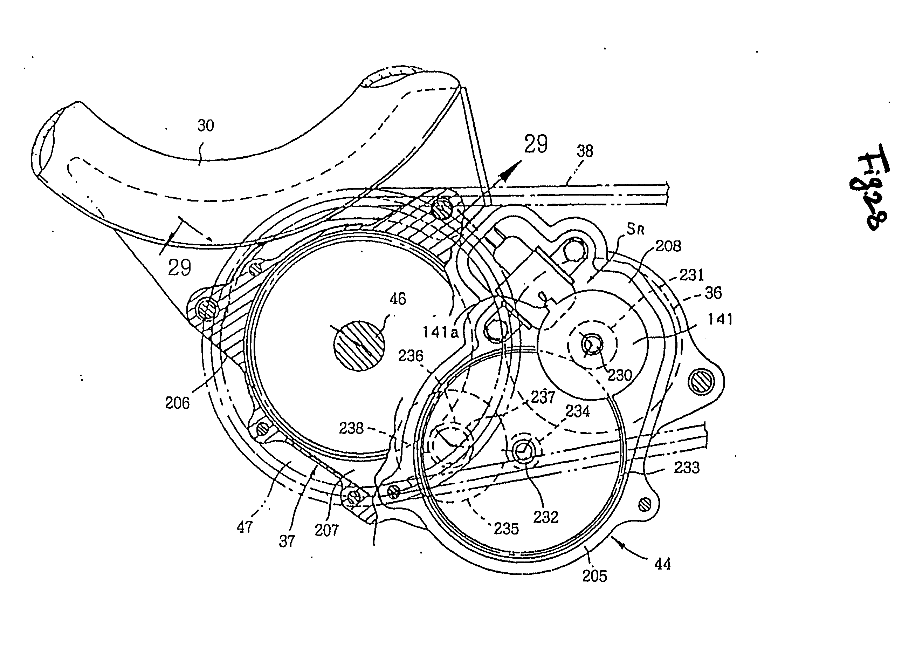

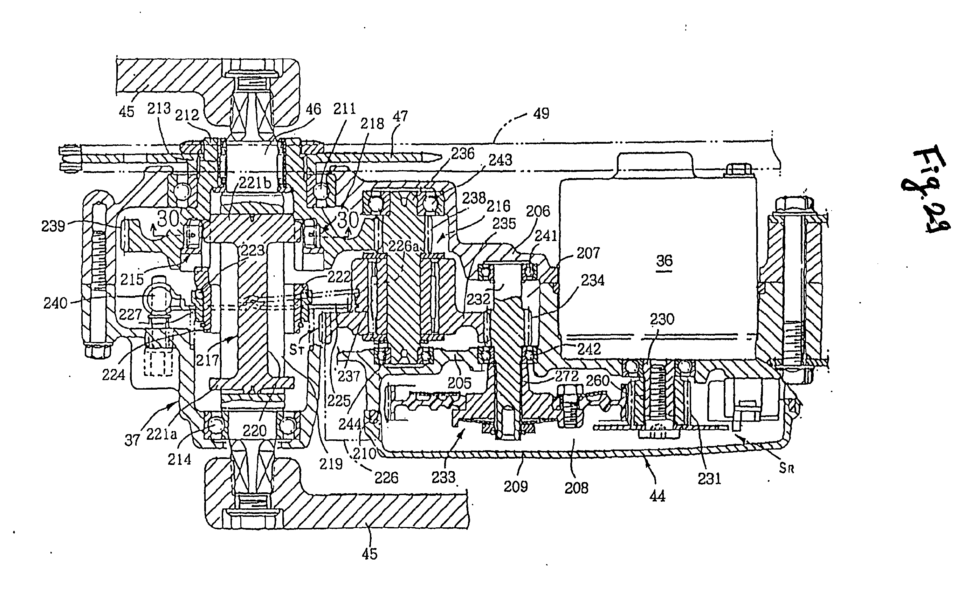

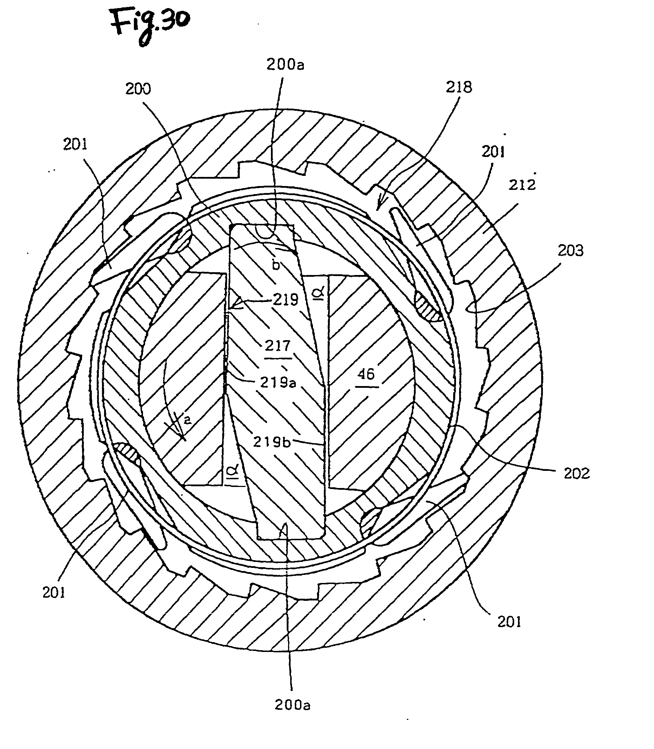

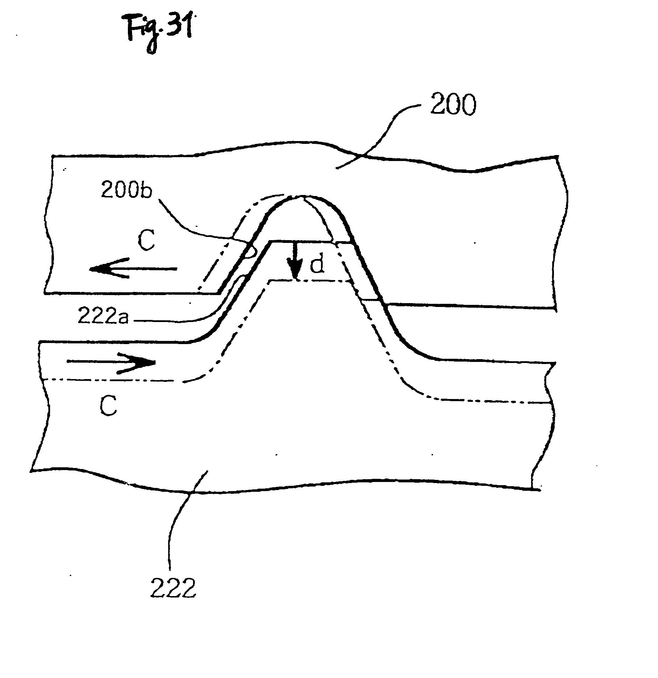

An assistive drive mechanism of a motor-assisted bicycle which is an example of the two-wheeled motor-driven vehicle for use in the rental system of the present invention will be described below. FIG. 28 is a vertical cross-sectional view of the power unit of the two-wheeled motor-driven vehicle, FIG, 29 is a cross-sectional view taken along line 29-29 of FIG. 28, FIG. 30 is a cross-sectional view taken along line 30-30 of FIG. 29, and FIG. 31 is a view showing the manner in which a slider inner member and a clutch inner ring 200 engage each other.

The casing 44 of the power unit 37 comprises a left casing member 205, a right casing member 206 coupled to the left casing member 205 with a first storage chamber 207 defined between the right casing member 206 and the left casing member 205, and a cover 209 coupled to the left casing member 205 with a second storage chamber 208 defined between the cover 209 and the left casing member 205. A gasket 210 of rubber is mounted on a surface of the cover 209 which is joined to the left casing member 205.

The crankshaft 46 is rotatably supported by the casing 44 such that a substantial portion thereof is disposed in the first storage chamber 207. A rotatable tube 212 is supported as a power transmitting member in the right casing member 206 by a ball bearing 211. The crankshaft 46 has a right end supported in the rotatable tube 212 by a roller bearing 213 and a left end supported in the left casing member 205 by a ball bearing 214. The drive sprocket 47 disposed on a right-hand side of the right casing member 206 is coupled to the rotatable tube 212.

Treading forces applied to the pedals 45 on the opposite ends of the crankshaft 200 are transmitted from the crankshaft 46 via a power transmitting means 215 to the drive sprocket 47. The power assisting motor 36, which is mounted on the casing 44, produces an output power that is transmitted via a speed reduction gear train 216 to the drive sprocket 47 in order to assist in the treading forces applied to the pedals 45.

The power transmitting means 215 for transmitting the power from the crankshaft 46 to the drive sprocket 47 is disposed in the first storage chamber 207. The power transmitting means 215 comprises a torsion bar 217 connected to the crankshaft 46 and a first one-way clutch 218 disposed between the rotatable tube 212 and the torsion bar 217.

As also shown in FIG. 30, the crankshaft 46 has an axial slit 219. The torsion bar 217 comprises a cylindrical shank 220 rotatably fitted between left and right inner wall surfaces 219a, 219b of the slit 219, an arm 221a projecting toward opposite sides from an end, on the left side of the vehicle, of the shank 220, and an arm 221b projecting toward opposite sides from an end, on the right side of the vehicle, of the shank 220. The torsion bar 217 is mounted in the slit 219.

The arm 221a of the torsion bar 217 is integrally coupled to the crankshaft 46 in intimately fitting contact with the left and right inner wall surfaces 219a, 219b of the slit 219. The other arm 221b of the torsion bar 217 is loosely fitted in the slit 219 with gaps α defined between the arm 221b and the left and right inner wall surfaces 219a, 219b. Therefore, the shank 220 of the torsion bar 217 can be twisted to such an extent that the arm 221b can move in the gaps α.

The first one-way clutch 218 comprises a clutch inner ring 200 disposed coaxially around the crankshaft 46 for rotation relative to the crankshaft 46, a rotatable tube 212 serving as a clutch outer ring disposed coaxially around the clutch inner ring 200, and a plurality of, e.g., four, ratchets 201 pivotally supported on an outer circumferential surface of the clutch inner ring 200 and normally urged to spread outwardly by an annular spring 202. The opposite ends of the arm 221b of the torsion bar 217 are fitted respectively in recesses 200a defined in an inner circumferential surface of the clutch inner ring 200. The rotatable tube 212 has ratchet teeth 203 disposed on an inner circumferential surface thereof for engaging the ratchets 201.

When the pedals 45 are treaded to rotate the crankshaft 46 in a normal direction, the torque of the crankshaft 46 is transmitted via the torsion bar 217, the first one-way clutch 218, and the rotatable tube 212 to the drive sprocket 47. When the pedals 45 are treaded to rotate the crankshaft 46 in a reverse direction, however, the first one-way clutch 218 slips, allowing the crankshaft 46 to rotate in the reverse direction.

When a torque is applied from the pedals 45 to the crankshaft 46 in the direction indicated by the arrow a in FIG. 30, the clutch inner ring 200 to which the load from the rear wheel 39 is transmitted via the rotatable tube 212 and the rackets 201 resists the torque in the direction indicated by the arrow a. Therefore, the arm 221b of the torsion bar 217 is twisted in the opposite direction (indicated by the arrow b) with respect to the crankshaft 46, and hence rotates relatively to the crankshaft 46. As a result, a relative rotation depending on the torque applied to the crankshaft 46 is produced between the crankshaft 46 and the clutch inner ring 200.

A slider inner member 222 is nonrotatably, but axially movably, supported on the outer circumferential surface of the crankshaft 46. A slider outer member 224 is rotatably supported on the outer circumferential surface of the slider inner member 222 by a plurality of balls 223.

As shown in FIG. 31, the crank inner ring 200 has a concave cam surface 200b defined in an end surface thereof which faces the slider inner member 222, and the slider inner member 222 has a convex cam surface 222a for engaging the concave cam surface 200b.

A detection lever 225 has a proximal end swingably supported on the left casing member 205 by a support pin 240 and an intermediate portion held against the slider outer member 224 remotely from the clutch inner ring 200. A stroke sensor 226, which cooperates with the detection lever 225 in making up a torque detecting means ST, is attached to the left casing member 205. The detection lever 225 has a tip end held against a probed 226a of the stroke sensor 226.

A spring 227 is disposed under compression between the detection lever 225 and the left casing member 205. The detection lever 225 is resiliently held against the slider outer member 224 under the forces of the spring 227, biasing the slider outer member 224 and the slider inner member 222 toward the clutch inner ring 200.

When the torsion bar 217 is twisted by a torque applied from the pedals 45 to the crankshaft 46, the slider inner member 222 rotates relatively to the clutch inner ring 200, pressing the cam surface 222a of the slider inner member 222 against the cam surface 200a of the clutch inner ring 200. As a consequence, the slider inner member 222 slides along the axis of the crankshaft 46 against the forces of the spring 227.

The detection lever 225 which is pushed by the slider outer member 224 that moves with the slider inner member 222 is turned about the support pin 240 thereby to press the probe 226a of the stroke sensor 226. The stroke of the probe 226a is proportional to the twisted displacement of the torsion bar 217, i.e., the input torque applied from the pedals 45. Thus, the torque detecting means ST detects the input torque.

The speed reduction gear train 216 for transmitting the power from the power assisting motor 36 to the drive sprocket 47 comprises a drive gear 231 fixed to a motor shaft 230 of the power assisting motor 36 in the second storage chamber 208, a first intermediate gear 233 as a special gear fixed to an end of a first idle shaft 232 and held in mesh with the drive gear 231 in the second storage chamber 208, a second intermediate gear 234 integral with the first idle shaft 232 in the first storage chamber 207, a third intermediate gear 235 held in mesh with the second intermediate gear 234, a second idle shaft 236 disposed coaxially with the third intermediate gear 235, a second one-way clutch 237 disposed between the third intermediate gear 235 and the second idle shaft 236, a fourth intermediate gear 238 integral with the second idle shaft 236 in the first storage chamber 207, and a driven gear 239 integral with the rotatable tube 212 to which the drive sprocket 47 is connected and held in mesh with the fourth intermediate gear 238.

The first idle gear 232 has an axis parallel to the motor shaft 230 of the power assisting motor 36. A ball bearing 241 is interposed between the right casing member 206 and the first idle shaft 232, and a ball bearing 242 is interposed between the left casing member 205 and the first idle shaft 232. The second idle shaft 236 has an axis parallel to the first idle shaft 232. A ball bearing 243 is interposed between the right casing member 206 and the second idle shaft 236, and a ball bearing 244 is interposed between the left casing member 205 and the second idle shaft 236.

The speed reduction gear train 216 transmits the torque produced by the power assisting motor 36 at a reduced speed to the drive sprocket 47. When the power assisting motor 36 is de-energized, the second one-way clutch 237 allows the second idle shaft 236 to idle, and the rotation of the drive sprocket 47 is not prevented by treading forces applied to the pedals 45.

When the user treads the pedals 45 to drive the motor-assisted bicycle, the power from the crankshaft 46 is transmitted via the power transmitting means 215 to the drive sprocket 47 and then via the chain 49 and the driven sprocket 48 to the rear wheel 39. At the same time, based on the input torque and speed information from a vehicle speed sensor (not shown), the assistance controller 50 controls the duty cycle of the power assisting motor 36 for thereby controlling the assistive forces.

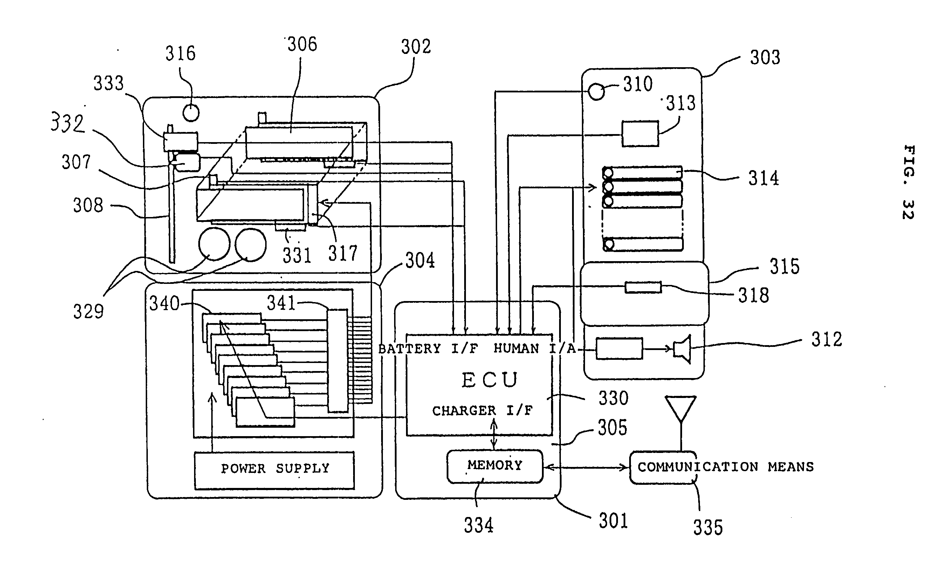

The battery exchanger 8 will now be described below. FIG. 32 is a block diagram of the battery exchanger 8. The battery exchanger 8 comprises a control section 301, a mechanical section 302, a console section 303, a charging section 304, and a communication means 335. The control section 301 has a central processor 330 comprising an ECU. The central processor 330 has a human interface to which there are connected a human detector 310 of the console section 303, a card reader 313, an antenna or ID detector 318 in a battery slot 315, a display unit 314, and a speaker 312.

The central processor 330 has a battery interface to which there are connected connectors 317 for 20 battery boxes 306, solenoids and indicators 307 of lock devices 331, and a door switch 332 and a door lock 333 of a door 308. The central processor 330 also has a charger interface to which a charger 340 is connected.

The charger 340 has 10 battery boxes 306 which are selectively connected to the connectors 317 via a selector unit 341. Therefore, the number of chargers 340 which are heavy can be reduced to half in accordance with an actual operating efficiency of the battery exchanger 8, and hence the battery exchanger 8 can be reduced in size and weight. Information supplied to the central processor 330 is stored in a memory 334, and transmitted by the communication means 335 to the central management apparatus 1.

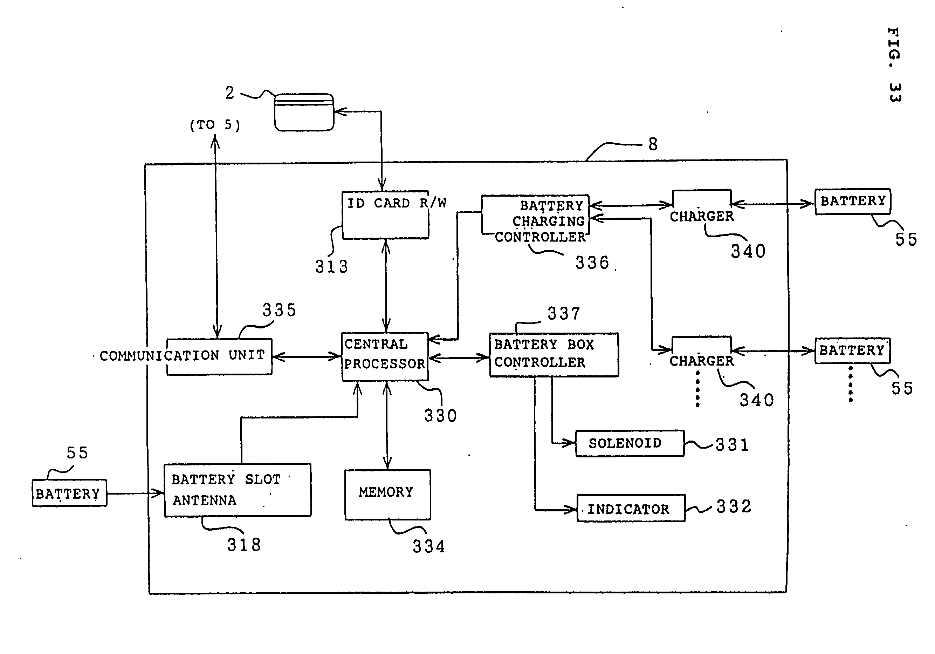

FIG. 33 is a block diagram of a control system of the battery exchanger 8. In FIG. 33, the central processor 330 of the battery exchanger 8 is connected to the central management apparatus 1 by a communication unit 335. To the central processor 330, there are connected the ID card reader/writer as the card reader 313, a battery charging controller 336, a battery box controller 337, and the ID detector 318 in the battery slot 315.

The memory 334 stores various data processed by the battery exchanger 8. The chargers 340 are connected to the battery charging controller 336, which controls a process of charging batteries 55 and a process of detecting charged states of batteries 55. The battery box controller 337 controls operation of the battery boxes 306 which stores batteries 55, and also controls the solenoids and the indicators 332 of the lock devices 331, and the door lock 333.

The ID detector 318 in the battery slot 315 communicates with the information chip 85 of a battery 55 to read information inherent in the battery 55, such as ID information thereof.

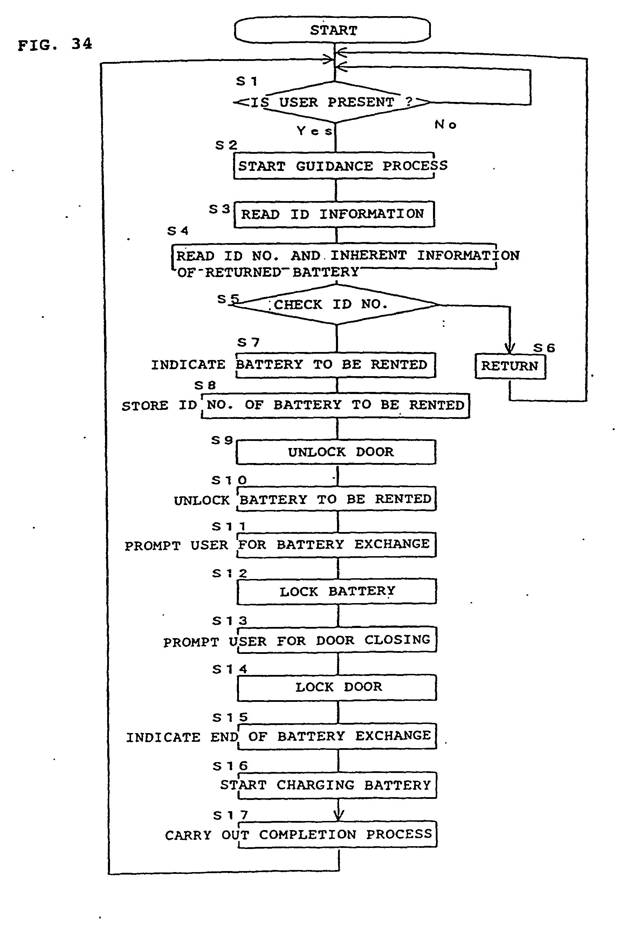

FIG. 34 is a flowchart of an operation sequence of the battery exchanger 8. When the user stands in front of the battery exchanger 8, the human detector 310 detects the user (S1), and the display unit 314 and the speaker 312 starts a guidance process (S2). For example, the speaker outputs a voice guidance "Welcome. Place the used battery into a battery slot, and insert the ID card into the card reader."

When the user inserts the ID card 2 into the ID card reader/writer 313, the ID card reader/writer 313 reads ID information from the ID card 2 (S3). The ID detector 318 in the battery slot 315 reads an ID number and inherent information from the returned battery 55 (S4), and checks the ID number (S5).

If the ID number is problematic, then the battery exchanger 8 indicates to the user with the display unit 314 and the speaker 312 that the battery 55 cannot be used, and the battery exchanger 8 does not provide the battery exchanging service, but returns the battery 55 to the user as a battery not belonging to the rental system (S6). If the ID number is not problematic, e.g., if the returned battery 55 is not a stolen battery, then the battery exchanger 8 indicates a process to use a battery to the user with the display unit 314 and the speaker 312.

First, battery boxes 306 housing those usable batteries 55 which have been fully charged or whose remaining energy is 70 % or more, among batteries 55 that are housed in a plurality of vertically spaced arrays are indicated by the display unit 314 and the speaker 312 and also the indicators 307 above those battery boxes 306 (S7). For example, the speaker 312 outputs a voice guidance "Open the door, and remove the battery from the second battery box."

The battery exchanger 8 stores the battery identification number of the battery 55 to replace the used battery (S8). Then, the battery exchanger 8 unlocks the door lock (S9), and operates the lock device 331 to unlock the battery 55 (S10). The step S7 may be carried out immediately after the step S10.

When the battery 55 is pulled out, the speaker 312 outputs a voice guidance "Place the used battery," for example (S11). When the returned battery 55 is placed into the battery box 306, the battery exchanger 8 locks the battery 55 (S12), and prompts the user to close the door with a voice guidance (S13). When the door is closed, the battery exchanger 8 locks the door (S14), and the speaker 312 outputs a voice guidance "Thank you. Place the new battery into the battery case," for example (S15). Then, the battery exchanger 8 starts charging the returned battery (S16).

The battery exchanger 8 then carries out a completion process (S17). Specifically, the battery exchanger 8 stores inherent data for charging, i.e., data of the date on which the used battery 55 is returned, the number of times that the battery 55 has been charged, etc., writes the data and the ID of the new battery into the ID card 2, returns the ID card 2 to the user, and transmits the data and the ID of the new battery via the communication link 9 to the central management apparatus 1. At this time, the amount of used energy or remaining energy of the battery 55 may also be transmitted to the central management apparatus 1.

If the battery itself has a communication means, then the battery exchanger 8 may supply electric energy to the communication means of the battery to enable the communication means to communicate with the central management apparatus 1. The battery exchanger 8 receives information from the central management apparatus 1 about a process of electrically processing the data, electrically processes the data according to the information about the process, and transmits the processed data via the communication link 9 to the central management apparatus 1.

The used vehicle is returned as follows: The user returns the motor-driven vehicle 7 to the parking lot 6, turns off the main switch 58, removes the ID card 2, and locks the parking lock 56. Since the parking lock 56 can manually be locked at any time, the parking lock 56 may be locked before the ID card 2 is removed. The card reader 60 can write data of the distance traveled by the motor-driven vehicle 7, the amount of electric energy consumed by the battery 55, etc. into the ID card 2 with the ID card reader/writer 16.

Then, the user places the ID card 2 on or inserts the ID card into the ID card reader/writer 16 of the reception station 5. The reception station 5 confirms the exchanging of the returned battery, and updates the data stored in the ID card 2.

In this manner, using the ID card 2, the battery 55 can be locked by electrically operating the battery lock solenoid 70 and the parking lock 56 can be unlocked by electrically operating the parking lock solenoid 71. Therefore, no conventional mechanical lock mechanisms are necessary. The lock 135 as the battery lock and the parking lock 56 can be provided independently of each other without any mechanical link therebetween. The freedom with which to install the battery 55 and the freedom with which to select the structure of the parking lock 56 are increased, and the locks can be applied to various forms of motor-driven vehicles for increased versatility.

Moreover, since the lock 135 and the parking lock 56 are unlocked by the battery lock solenoid 70 and the parking lock solenoid 71 which are electric actuators, they do not need to be manually unlocked with mechanical keys. Therefore, the user can leave the motor-driven vehicle immediately after the motor-driven vehicle is stopped, and finds it easy to handle the motor-driven vehicle.

Because the ID card 2 can store rental information, the user who has rented a motor-driven vehicle 7 can use the motor-driven vehicle 7 with only the ID card 2 without the need for any mechanical keys. The ID card 2 is therefore highly convenient for the user. Inasmuch as the rental service provider can dispense with a process for loaning and returning keys, the rental service provider finds it easy to manage the ID card 2. Thus, the ID card 2 is optimum for the rental system.

In addition, since the ID card 2 stores data of a rental vehicle No., a loaned battery No., a date of use, and time, the charging for the rental vehicle user and the maintenance of the vehicle and the battery can be performed using the ID card 2. Furthermore, the user can easily exchange the battery because the user can exchange the used battery for a fully charged battery utilizing the battery exchanger 8 with only the ID card 2 used.

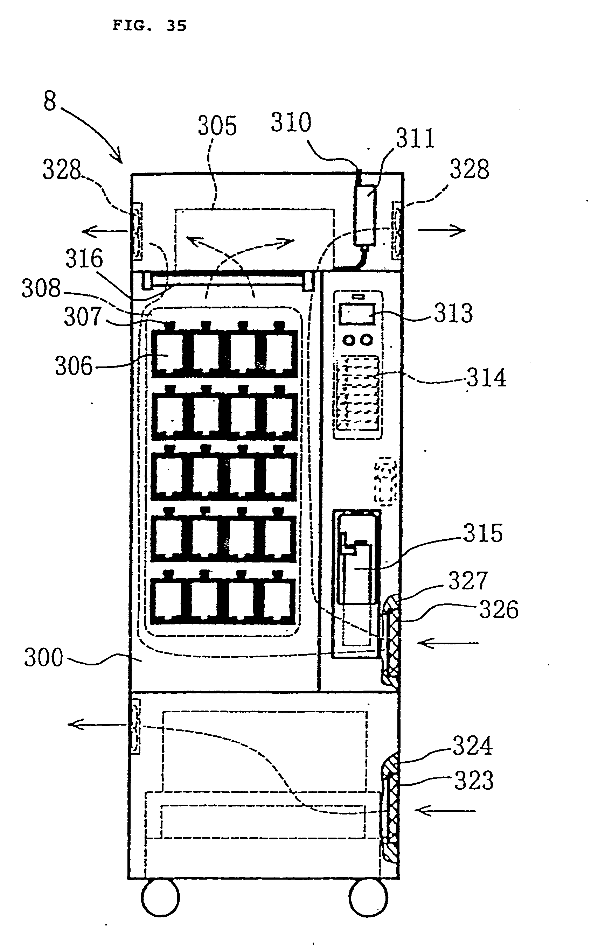

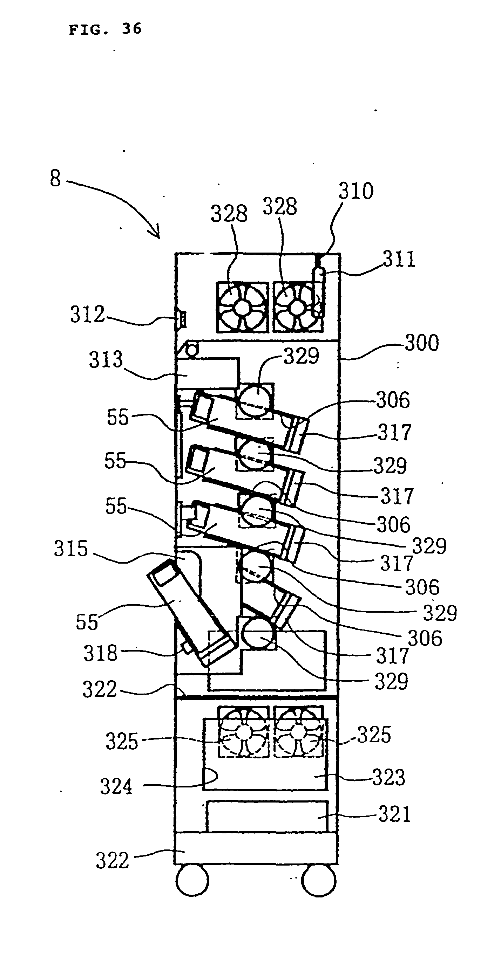

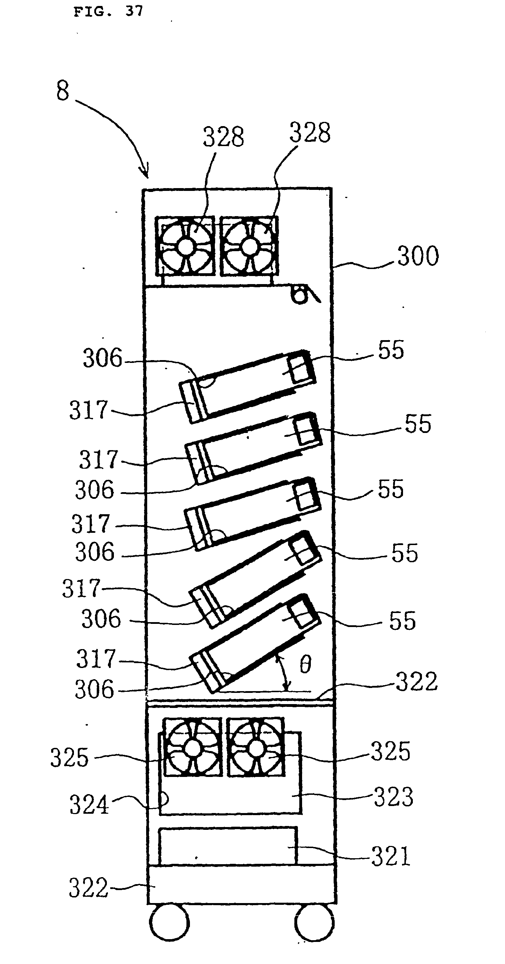

A specific structure of the battery exchanger 8 will be described below. FIG. 35 is a front elevational view of the battery exchanger 8, FIG. 36 is a right-hand side elevational view, partly cut away, of the battery exchanger 8, and FIG. 37 is a left-hand side elevational view, partly cut away, of the battery exchanger 8. The battery exchanger 8 has a vertically elongate case 300 and includes a control unit 305 disposed in an upper portion of the case 300. The battery boxes 306 are arranged in four horizontal rows and five vertical columns in a most central portion of the case 300. Each of the battery boxes 306 is open forwardly with the indicator 307 mounted in an upper portion of the inlet thereof. These battery boxes 306 can be opened and closed by the single door 308.

The door 308 is positioned to one side of the front panel of the battery exchanger 8 with the console section disposed in a remaining area of the front panel of the case 300 which is free of the door 308. The console section includes the human detector 310, a portable radio telephone set 311, the speaker 312 (FIG. 36), the card reader 313, the display unit 314, and the battery slot 315 which are successively arranged downwardly. A lighting device 316 such as a fluorescent lamp is disposed above the battery boxes 306 in a front area of the case 300.

The portable radio telephone set 311 is used to communicate with the supervisor in case of a failure of the battery exchanger 8. The speaker 312 is used to give a voice guidance about how to use the battery exchanger 8, and generate a warning sound when the battery exchanger 8 is in trouble. The card reader 313 serves to read stored information from and write information to be stored into the ID card 2 which is inserted therein. The display unit 314 comprises a light-guidance panel. Accordingly, the user is guided to operate the battery exchanger 8 with sound and light.

Each of the battery boxes 306 is in the form of a deep hole complementary in shape to the battery 55 and has the connector 317 disposed in its bottom. When the battery 55 is inserted into the battery box 306, the battery 55 contacts the connector 317 so as to be charged or discharged.

As shown in FIGS. 36 and 37, the battery boxes 306 have vertically different angles at which batteries 55 can be inserted therein. In the illustrated embodiment, upper three battery boxes 306 have the same angle at which batteries 55 can be inserted therein, and lower two battery boxes 306 have the same angle at which batteries 55 can be inserted therein. The insertion angle of the lower set of battery boxes 306 is greater than the insertion angle of the upper set of battery boxes 306. The division of the sets of battery boxes 306 is arbitrary, and the battery boxes 306 may not be divided into sets, but may individually be inclined successively at insertion angles θ (with respect to the horizon) that are progressively smaller in the downward direction.

Since the battery boxes 306 that serve as battery insertion ports are inclined downwardly, batteries 55 can easily be taken into and out of the battery boxes 306. Furthermore, inasmuch as the battery boxes 306 are inclined at vertically different angles, it is possible to establish insertion angles for allowing batteries 55 to be taken into and out of the battery boxes 306 mostly smoothly in view of the actual process for the user to take batteries 55 into and out of the battery boxes 306. Moreover, the space in the battery exchanger 8 in the vertical or fore-and-aft direction is made smaller, making the battery exchanger 8 more compact, than if the battery boxes 306 in the rows or arrays were parallel to each other.

Inasmuch as those battery boxes 306 in a lower portion of the case 300 are inclined downwardly more than those in an upper portion of the case 300, when the user inserts a battery 55 into or removes a battery 55 from a battery box 306 while holding the battery 55 with one hand, the burden on the wrist of the user is minimized. Therefore, the user can handle the battery 55 appropriately from the ergonomic standpoint, and can take the battery 55 into and out of the battery box 306 smoothly and easily with reduced labor.

Since the handle 80 of the battery 55 is movable, even when the user takes batteries 55 into and out of battery boxes 306 at vertically different heights, the user may vertically or horizontally turn the tip end of the battery 55 with the other hand while not substantially changing the angle of the wrist of the hand holding the handle 80, so that the tip end of the battery 55 can be turned vertically about the shaft 87 so as to match the insertion angle of the battery box 306 with ease. Therefore, the user can take the battery 55 into and cut of the battery box 306 easily.

The battery slot 315 is used to identify the ID of the battery 55, and is singly disposed laterally of the control section 301. The battery slot 315 has a height which is substantially the same as the height of the lowest row of battery boxes 306 and an insertion angle greater than the insertion angle of the lowest row of battery boxes 306. The battery box 315 has therein the ID detector as an information recognizing means 318 for acquiring identification information from the information chip 85 (FIGS. 20 and 21) of the battery 55.

The charging section 304 (see FIG. 32) comprises a charging AC/DC converter 320 and a DC booster DC/DC converter 321. Because the charging section 304 is heated to a high temperature, it is isolated from the upper region by a partition 322. The charging section 304 has an inlet port 324 defined in one side thereof and having a filter 323 and discharge fans 325 in the other side thereof for passing external air through the charging section 304 for ventilation.

A inlet port 327 with a filter 326 is also disposed laterally of the battery slot 315, and discharge fans 328 are disposed on opposite sides of the control unit 305. A vertical array of fans 329 corresponding respectively to the rows or arrays of the battery boxes 306 is disposed on one side (on the right-hand side in the illustrated embodiment) of the battery boxes 306.

External air flowing in from the inlet port 327 near a lower portion of the battery slot 315 is caused by the fans 329 to flow from one side to the other of the battery boxes 306, thus cooling the interior of the case 300 which has been heated by the charging of batteries 55. The cooling air is then caused by the discharge fans 328 to flow upwardly, cools the control unit 305, and is discharged out of the case 300. Therefore, the interior of the case 300 which tends to be heated to a high temperature by the charging of batteries 55 is cooled, preventing electronic parts of the control unit 305 that is particularly vulnerable to heat from being heated to a high temperature.

Because the battery boxes 306 and the charging section 304 which serve as a charging assembly, and the battery slot 315 with the ID reader for batteries are separate from each other in the battery exchanger 8, the single battery slot 315 can be shared by 10 chargers 340 and hence is much fewer than the chargers 340. Consequently, the battery exchanger 8 may be small in size and low in cost. As the battery slot 315 is separate from the mechanical section 302 and the charging section 304, the battery slot 315 can easily be rendered less susceptible to heat from these charging-related sections.

Inasmuch as the battery boxes 306 where batteries 55 are returned and the battery slot 315 are separate from each other, even 20 battery boxes 306 can share the single battery slot 315, which is much fewer than the battery boxes 306. Thus, the battery exchanger 8 may be small in size and low in cost.

An arrangement for processing inherent information such as ID information of batteries according to another embodiment will be described below. This embodiment is also applicable to a rental system for batteries only. However, because the structure of the battery exchanger 8 remains the same, common components are designated by identical reference characters.

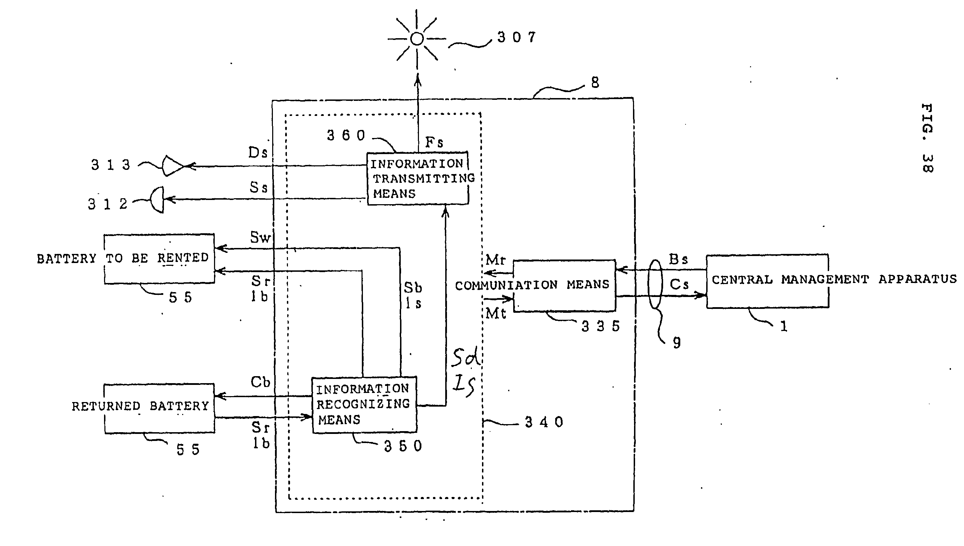

FIG. 38 is a block diagram of an arrangement in the battery exchanger 8 for processing inherent information of batteries. The battery exchanger 8 has a control means 340 and a communication means 335. The control means 340 has an information recognizing means 350 and an information transmitting means 360.

The information recognizing means 350 comprises a non-contact-type data communication device, specifically, the battery slot 315, for accessing stored information of a battery 55. The information recognizing means 350 bidirectionally transmits information to and from a communication means 55T in the battery 55, and checks a battery identification number with a reader thereof to decide whether the battery 55 is in a normally rented state.

If the information recognizing means 350 determines that the battery 55 is in a normally rented state, then the information recognizing means 350 reads a signal Sr representing the user's rental ID, the latest rental year, month, day, and hour, the updated date, and the present remaining energy, which are stored in the battery 55, with the reader, and supplies these items of information and a data recognition signal Sd to the information transmitting means 360.

The information recognizing means 350 writes a signal Sw representing the latest rental year, month, day, and hour, the present remaining energy and the like into a rental battery 55 with a writer thereof, and supplies these items of information and a data recognition signal Sd to the information transmitting means 360. Before the battery 55 is rented, the information recognizing means 350 reads signals Sr, Ib representing the identification No. of the battery , the remaining amount of energy of the battery, and the history of use of the battery with the reader, and supplies data recognition signals Sd, Is to the information transmitting means 360.

The information transmitting means 360 supplies signals Ds, Ss, Fs to control the display unit 314 such as an LCD, a CRT, an LED, an EL, or the like, the speaker 312, and the indicator 307 such as an LED, a lamp, or the like above each of the battery boxes 306. The information transmitting means 360 supplies the display signal Ds to the display unit 314, the sound signal Ss to the speaker 312, and the flicker signal Fs to the indicator 307.

The information recognizing means 350 also reads the data of the history of use of the battery 55 which is stored in a memory means 55A of the battery 55. The information recognizing means 350 has terminal connectors (not shown) for measuring electric characteristics of the battery 55 and charging the battery 55.

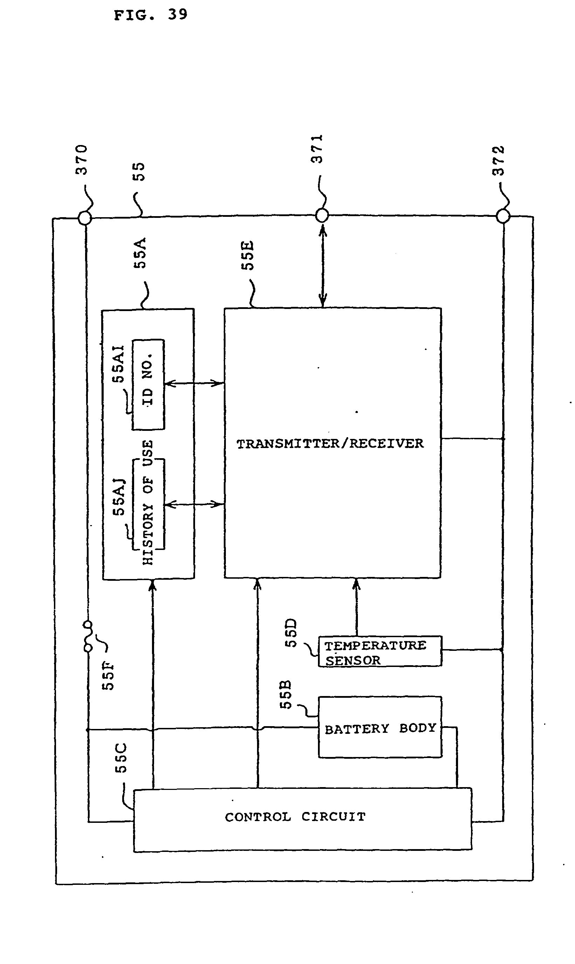

The information recognizing means 350 measures the remaining energy of the battery 55 from those terminal connectors corresponding to terminals 370, 371, 372 (see FIG. 39) of the battery 55 to produce a battery signal Ib, and carries out a process necessary to charge the battery 55 depending on the battery signal Ib with a charging signal Cb from those terminal connectors corresponding to terminals 370, 372 of the battery 55.

The information recognizing means 350 also obtains inherent information of the battery 55, such as a battery temperature and stored information from the memory means 55A, with the battery signal Ib, and supplies the inherent information of the battery 55 as an information signal Is to the information transmitting means 360.

The communication means 335 of the battery exchanger 8 comprises a bidirectional transmitter such as a modem, which comprises a modulator, a clock circuit, a transmitter, and a photocoupler. The communication means 335 modulates an information signal Mt comprising the read signal Sr and the battery signal Ib from the information recognizing means 350, and supplies the modulated signal as a transmitted signal Cs in the form of a pulse signal or the like via the communication link 9 to the central management apparatus 1.

The communication means 335 demodulates a reception signal Bs such as a pulse signal or the like supplied from the central management apparatus 1 via the communication link 9, and supplies the demodulated signal as a processed signal Mr to the control means 340. Based on the processed signal Mr, the information recognizing means 350 in the control means 340 supplies a charging signal Cb to the battery 55. If the number of times that a battery 55 is charged and discharged within a predetermined period of time is too large, then the battery 55 may not be charged, or the service to rent the battery 55 to the user may not be performed.

The central management apparatus 1 receives the transmitted signal Cs with respect to data in the battery exchanger 8 via the communication link 9, and supplies a received signal Bs with respect to necessary data to the battery exchanger 8 via the communication link 9.

The central management apparatus 1 has a computer for carrying out a centralized management process to manage users, rental batteries, battery exchangers 8, measurements and execution commands for charging batteries 55, battery lives, and collection of charges for the use of batteries. The central management apparatus 1 also manages a database of user's information including user's IDs, identification numbers of rental batteries, remaining amounts of energy of rental batteries when they are rented and returned, used amounts of energy of rental batteries, addresses, ages, telephone numbers, sex, account numbers, the numbers of times that users have rented batteries, and charges for the use of batteries. The central management apparatus 1 also manages a database of battery information including sales of batteries, the numbers of times that batteries are used, the numbers of times that batteries are charged and discharged, charging dates and hours, charged and discharged amounts of energy, battery lives and needs to exchange batteries which are determined from the above data. The central management apparatus 1 further manages data of availabilities and turnover rates of battery exchangers 8, ranges of movement of users, patterns of actual use of batteries, and future battery rental business plans.

The battery 55 has a positive terminal 370 for supplying electric energy, a terminal 371 for electric measurement, and a negative terminal 372 for supplying electric energy. The terminal 371 for electric measurement may comprise a plurality of terminals.

The memory means 55A stores identification numbers and inherent information of batteries 55. The inherent information represents returning dates and hours, the number of times that batteries 55 are charged and discharged, rental dates and hours, battery temperatures, and amounts of remaining energy of batteries. The battery identification numbers comprise fabrication serial numbers and fabrication years and dates. The inherent information may include battery identification numbers and rental IDs. The inherent information of batteries 55 is supplied to the battery exchanger 8 by way of communications between the information transmitting means 360 and the communication means 335 via the terminal 371 for electric measurement. The amounts of remaining energy of batteries 55 are measured, and the batteries 55 are charged, with the positive terminal 370 for supplying electric energy and the negative terminal 372 for supplying electric energy.

A bar code may be applied to a side of the battery 55, and a bar-code reader may be provided in the personnel-free battery station (battery exchanger) 8, so that information for identifying batteries 55 may further be added.

In the battery rental system, when the personnel-free automatic battery rental apparatus 8 recognizes a user, the information transmitting means 360 indicates to the user a procedure to use the battery exchanger 8 and a battery box 306 for returning a battery with a voice guidance and the display unit 314, and flickers the indicator 307 above the battery box 306 for returning a battery.

FIG. 39 is a simplified view showing an arrangement of the battery 55.

The battery 55 comprises a control circuit 55C, a battery body 55B, a temperature sensor 55D, the memory means 55A, a transmitter/receiver 55E, and a fuse 55F. The battery 55 also comprises the positive terminal 370 for supplying electric energy, the terminal 371 for electric measurement, and the negative terminal (grounding terminal) 372 for supplying electric energy.

The positive terminal 370 for supplying electric energy is connected to the control circuit 55C and the battery body 55B via the fuse 55F. The battery body 55B comprises a nickel-cadmium battery or the like which can repeatedly be charged.

The control circuit 55C has a plurality of LEDs or a bar-graph meter. The control circuit 55C detects the amount of remaining energy of the battery body 55B, displays the detected amount of remaining energy on the LEDs or the bar-graph meter, and supplies a signal indicative of the detected amount of remaining energy to the transmitter/
receiver 55E. The control circuit 55C detects a malfunction of the battery body 55B, and supplies a signal indicative of the detected malfunction to the transmitter/
receiver 55E. The battery body 55B has a negative terminal connected to the control circuit 55C and to the negative terminal 372 for supplying electric energy via a short-circuiting resistor (shunt resistor) in the control circuit 55C.

The memory means 55A comprises a memory 55AJ for storing the history of use of the battery 55 and a memory 55AI for storing the identification number of the battery 55. The memory 55AJ may store, as the history of use, the returning date and hours, the number of times that the battery 55 has been charged and discharged over a predetermined period of time, the rental date and hours, or a combination thereof. The memory means 55A may also store inherent information (the amounts of remaining energy (the amount of remaining energy when the battery is rented and the present amount of remaining energy), the number of times that the battery 55 has been charged and discharged, and the number of times that the battery has been used, etc.) in the memory 55AJ or the memory 55AI.

The control circuit 55C monitors the voltage across the battery body 55B. When the control circuit 55C detects that the battery body 55B has been charged, the control circuit 55C supplies a signal indicative of a detected fully charged state to the memory 55AJ. The memory 55AJ stores the received signal. The temperature sensor 55D detects the temperature of the battery body 55B, and supplies a signal indicative of the detected temperature to the transmitter/receiver 55E. The data of the history of use and the data of the battery identification number stored in the memory means 55A can be accessed from the transmitter/ receiver 55E.

The transmitter/receiver 55E transmits the data of the history of use from the memory 55AJ, the data of the battery identification number from the memory 55AI, the data based on the signal indicative of the detected malfunction and the signal indicative of the detected amount of remaining energy from the control circuit 55C, the data based on the signal indicative of the detected temperature from the temperature sensor 55D, or the stored information from the memory means 55A via the terminal 371 for electric measurement out of the battery 55. However, the control circuit 55C may not supply the signal indicative of the detected amount of remaining energy to the transmitter/
receiver 55E, and the amount of remaining energy may be detected by the battery exchanger 8 via the terminal connectors.

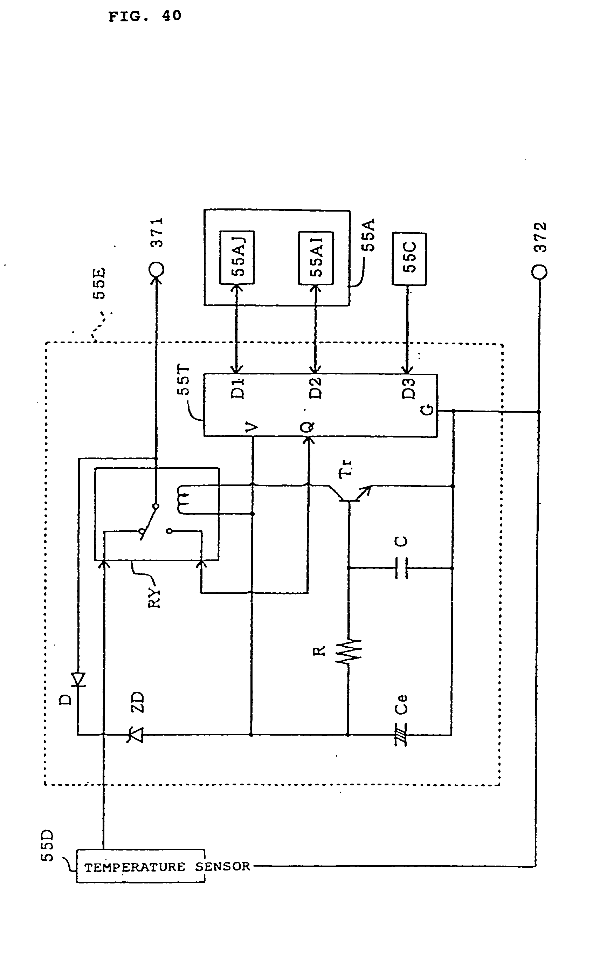

FIG. 40 is a view showing a simplified arrangement of the transmitter/receiver 55E. The transmitter/receiver 55E comprises a relay RY, a diode D, a zener diode ZD, a resistor R, an electrolytic capacitor Ce, a capacitor C, a transistor Tr, and a communication means 55T.

The relay RY has a common contact connected to the terminal 371 for electric measurement, a break contact connected to the temperature sensor 55D, and a make contact connected to a Q terminal of the communication means 55T.

The terminal 371 for electric measurement is supplied with an output signal from the temperature sensor 55D. When a positive potential exceeding a breakdown voltage is applied from an external source (e.g., the battery exchanger 8) to the terminal 371 for electric measurement for a short period of time, the electrolytic capacitor Ce is charged, and a voltage is applied to a power supply terminal V of the communication means 55T to energize the communication means 55T. Based on the charging and discharging of the electrolytic capacitor Ce as a power supply, the transistor Tr is turned on for a period of time determined by the resistor R and the capacitor C for thereby turning on the relay RY for the period of time.

The movable contact of the relay RY moves to disconnect the temperature sensor 55D from the terminal 371 for electric measurement and connect the terminal 371 for electric measurement to the communication terminal Q of the communication means 55T for the period of time. The terminal 371 for electric measurement can access, via the communication means 55T, data (or stored information) of the memory means 55A or data (or the control circuit 55C itself) from the control circuit 55C.

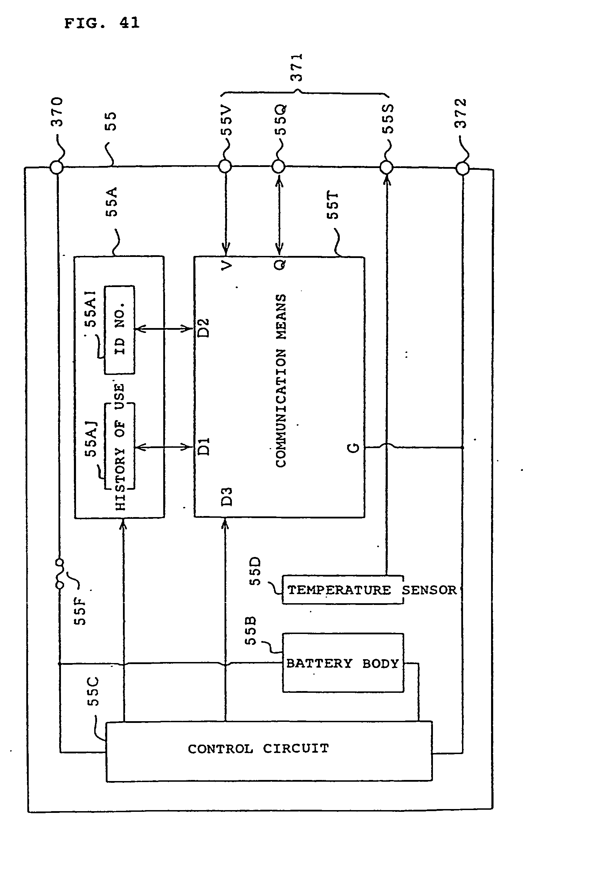

FIG. 41 is a view showing a simplified arrangement of another battery for motor-driven vehicles. The battery 55 comprises a control circuit 55C, a battery body 55B, a temperature sensor 55D, a memory means 55A, a communication means 55T, and a fuse 55F. The battery 55 also comprises a positive terminal 370 for supplying electric energy, a terminal 371 for electric measurement, and a negative terminal (grounding terminal) 372 for supplying electric energy.

The terminal 371 for electric measurement shown in FIG. 41 comprises a plurality of terminals including a terminal 55V for supplying electric energy to the communication means 55T, a terminal 55Q connected to a communication terminal Q of the communication means 55T, and a terminal 55S for outputting a signal representing a detected temperature from the temperature sensor 55D.

The positive terminal 370 for supplying electric energy is connected via the fuse 55F to the control circuit 55C and the battery body 55B. The battery body 55B comprises a nickel-cadmium battery or the like which can repeatedly be charged.

The control circuit 55C has a plurality of LEDs or a bar-graph meter. The control circuit 55C detects the amount of remaining energy of the battery body 55B, displays the detected amount of remaining energy on the LEDs or the bar-graph meter, and supplies a signal indicative of the detected amount of remaining energy to the communication means 55T (its terminal D3).

The control circuit 55C detects a malfunction of the battery body 55B, and supplies a signal indicative of the detected malfunction to the communication means 55T (its terminal D3). The battery body 55B has a negative terminal connected to the control circuit 55C and to the negative terminal 372 for supplying electric energy via a short-circuiting resistor (shunt resistor) in the control circuit 55C. However, the control circuit 55C may not supply the signal indicative of the detected amount of remaining energy to the communication means 55T, and the amount of remaining energy may be detected by the battery exchanger 8 via the terminal connectors.

The memory means 55A comprises a memory 55AJ for storing the history of use of the battery 55 and a memory 55AI for storing the identification number of the battery 55. The memory 55AJ may store, as the history of use, the returning date and hours, the number of times that the battery 55 has been charged and discharged over a predetermined period of time, the rental date and hours, or a combination thereof. The memory means 55A may also store inherent information (the amounts of remaining energy (the amount of remaining energy when the battery is rented and the present amount of remaining energy), the number of times that the battery 55 has been charged and discharged, and the number of times that the battery has been used, etc.) in the memory 55AJ or the memory 55AI.

The control circuit 55C monitors the voltage across the battery body 55B. When the control circuit 55C detects that the battery body 55B has been charged, the control circuit 55C supplies a signal indicative of a detected fully charged state to the memory 55AJ. The temperature sensor 55D detects the temperature of the battery body 55B, and supplies a signal indicative of the detected temperature to the terminal 55S. The data of the history of use and the data of the battery identification number stored in the memory means 55A can be accessed from the communication means 55T.

The communication means 55T transmits the data of the history of use from the memory 55AJ, the data of the battery identification number from the memory 55AI, the data based on the signal indicative of the detected malfunction and the signal indicative of the detected amount of remaining energy from the control circuit 55C, the data based on the signal indicative of the detected temperature from the temperature sensor 55D, or the stored information from the memory means 55A via the terminal 371 for electric measurement (particularly the terminal 55Q and the terminal 55S) out of the battery 55. For example, these data may be transmitted to the battery exchanger 8 or directly to the central management apparatus 1.

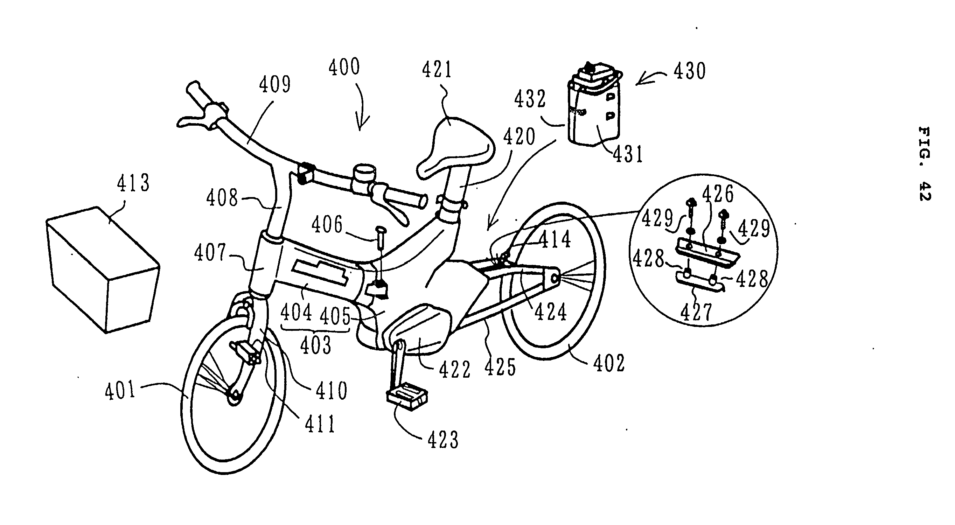

A second embodiment is shown in FIGS. 42 through 46. In this embodiment, a card key system similar to the card key system according to the previous embodiment, which includes the battery 55 and the control of the battery lock and the parking lock with the ID card 2, is applied to a motor-assisted bicycle 400 of another type, and the battery 55 is installed behind the saddle seat.

The motor-assisted bicycle 400 has a vehicle frame 403 supporting a front wheel 401 and a rear wheel 402. The vehicle frame 403 is divided into a front section 404 and a rear section 405, and can be folded by a hinge 406.

The front section 404 is in the form of a prismatic tube and has a head pipe 407 on its front end by which a handle post 408 is angularly movably supported. The handle post 408 has an upper end connected to a bar handle 409 and a lower end shaped as a front fork 410 which supports the front wheel 401 and a parking lock 411 that is of the same structure as the parking lock according to the previous embodiment. Reference numeral 412 represents a front wheel brake caliper, 413 a basket, and 414 a rear wheel brake caliper.

The rear section 405 supports a lower end of a seat post 420 on its upper portion. The seat post 420 has its height adjustable and supports a saddle seat 421 mounted on its upper end. A power assisting unit 422 which is identical to the power unit according to the previous embodiment is mounted on a lower portion of the rear section 405 for assisting manual forces inputted from pedals 423.

Upper and lower pairs of laterally spaced rear frames 424, 425 extend rearwardly from a rear portion of the rear section 405. The rear wheel 402 is supported between the rear ends of the rear frames 424, 425.

Plates 426, 427 extend between the upper rear frames 424 in vertically sandwiching relationship to the upper rear frames 424. Bolts 429 are threaded downwardly through respective through holes in the plate 426 into nuts 428 on the plate 427 for thereby fastening the plates 426, 427 to the rear frames 424.

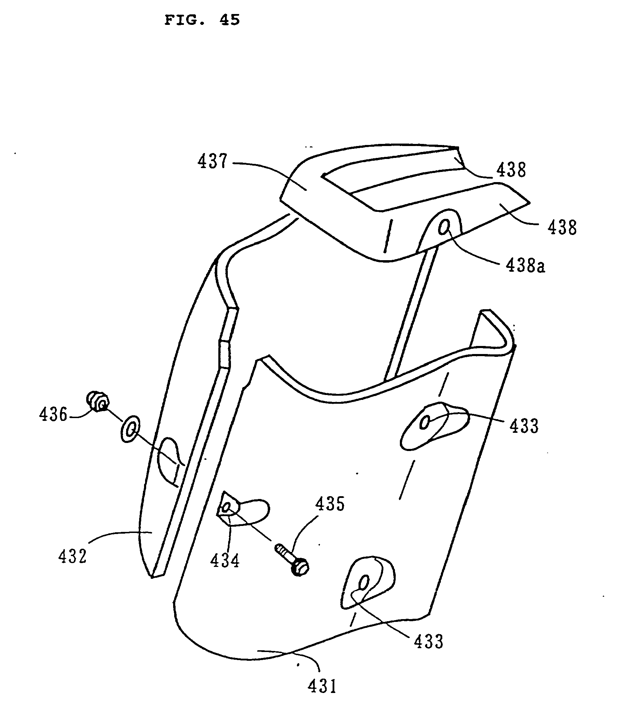

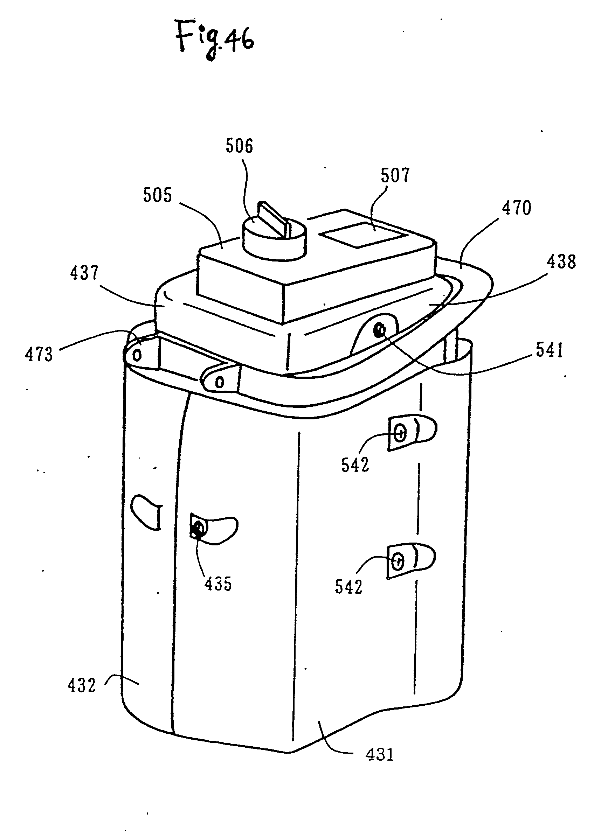

A battery assembly unit 430 is mounted behind the seat post 420. The battery assembly unit 430 comprises the battery 55 according to the previous embodiment, and an inner unit including a battery box (described later on), the card reader 60, and the lock 135, which are covered with outer covers 431, 432 and a cap cover 437, making up an integral unit (see FIGS. 45 and 46).

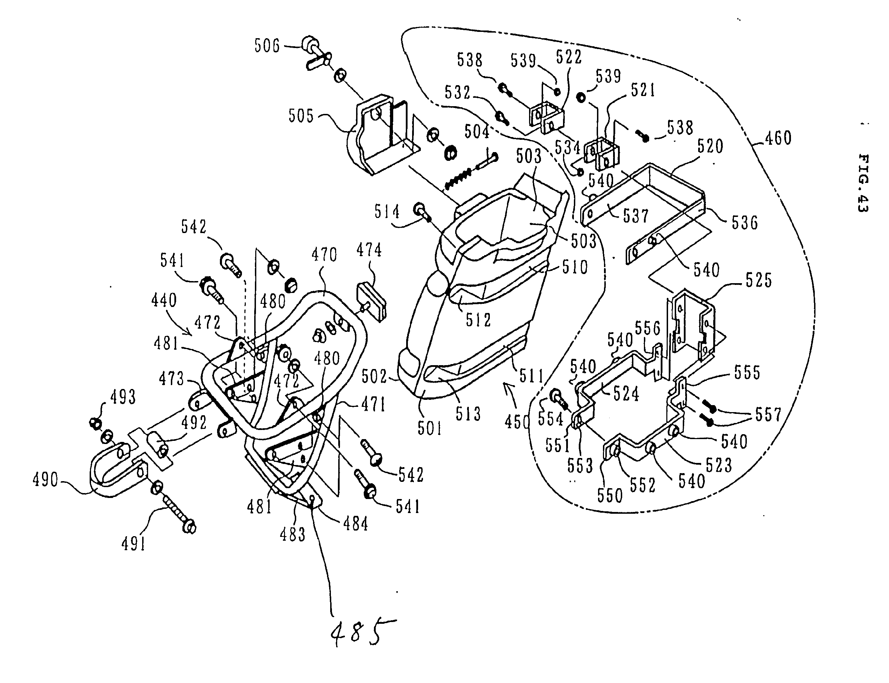

FIG. 43 shows an exploded perspective view of the inner unit. The inner unit is constructed of a battery unit frame 440, a battery box 450, joint members 460, etc.

The battery unit frame 440 is of a substantially rectangular shape as viewed in plan which is similar to a general rear carrier disposed behind the saddle seat. The battery unit frame 440 has an upper frame 470 whose inclined portion can be gripped for lifting the vehicle frame, and a substantially U-shaped vertical frame 471 extending obliquely downwardly from a lower end of an intermediate portion of laterally spaced opposite sides of the upper frame 470.

Upwardly projecting stays 472 are attached to the upper frame 470 forwardly of the junction between the laterally spaced opposite sides of the upper frame 470 and the vertical frame 471. A substantially channel-shaped attachment bracket 473 is integrally welded to a front side of the upper frame 470 and has both ends projecting forwardly. A reflector 474 is attached to a rear side of the upper frame 470.

Small stays 480 projecting forwardly are mounted on upper portions of laterally spaced sides of the vertical frame 471, and large stays 481 projecting forwardly are mounted on the laterally spaced sides of the vertical frame 471 below the small stays 480. Each of the small stays 480 has a single through hole defined therein, and each of the large stays 481 has three through holes defined therein having two types of diameters.

An attachment plate 483 projecting obliquely downwardly and rearwardly has an upper end welded to a lower side of the vertical frame 471. The attachment plate 483 has a lower end bent substantially horizontally into a superposing member 484 which is superposed on the plate 426 and fastened to the plate 426 by the bolts 429 which pass through respective through holes 485 defined in the superposing member 484.

The projecting ends of the attachment bracket 473 are disposed one on each side of the seat post 420, superposed on rearwardly projecting ends of a U-shaped bracket 490 which is attached from the front side to the seat post 420, and coupled thereto by a bolt 491, a collar 492, and a nut 493.

The battery unit frame 440 now has its front portion coupled to the seat post 420 and its lower portion coupled to the rear frames 424. The battery unit frame 440 is installed after the battery assembly unit 430 is assembled.

The battery box 450 has a left cover 501 and a right cover 502 which are horizontally separate from each other, with a battery storage space 503 defined therebetween. The battery box 450 is covered with a lid 505 openably and closably coupled to the edge of an upper opening in the battery box 450 via the hinge 504, and hence can be opened and closed by the lid 505.

Although not shown in FIG. 43, the card reader 60, which is the same as the card reader according to the previous embodiment, is disposed behind the battery box 450, and the lock 135 for the battery is disposed below the battery box 450. Since the card reader is oriented such that its right-hand side as viewed in FIG. 12 faces forwardly of the vehicle frame, the longitudinal direction, as viewed in plan, of the substantially tubular body extends along the vehicle frame and the card reader is disposed behind the saddle seat 421 without projecting laterally of the vehicle, allowing the user to get on and off the vehicle with ease. Because the card reader is positioned rearwardly, the user can easily insert an ID card into and remove an ID card from the card reader.

Each of the left cover 501 and the right cover 502 has upper and lower grooves 510, 511 defined in its side and having front ends shaped into recesses 512, 513 extending toward the mating surfaces of the left cover 501 and the right cover 502. Upper ends of these mating surfaces are coupled to each other by a screw 514.

The battery box 450 is assembled by integrally joining the left cover 501 and the right cover 502 with joint members 460, and is attached to the battery unit frame 440 by the joint members 460. The outer covers 431, 432 can be attached to outer surfaces of the battery box 450.

The joint members 460 include an upper band 520, an upper band left stay 521, an upper band right stay 522, a left lower band 523, a right lower band 524, and a battery lock unit cover 525.

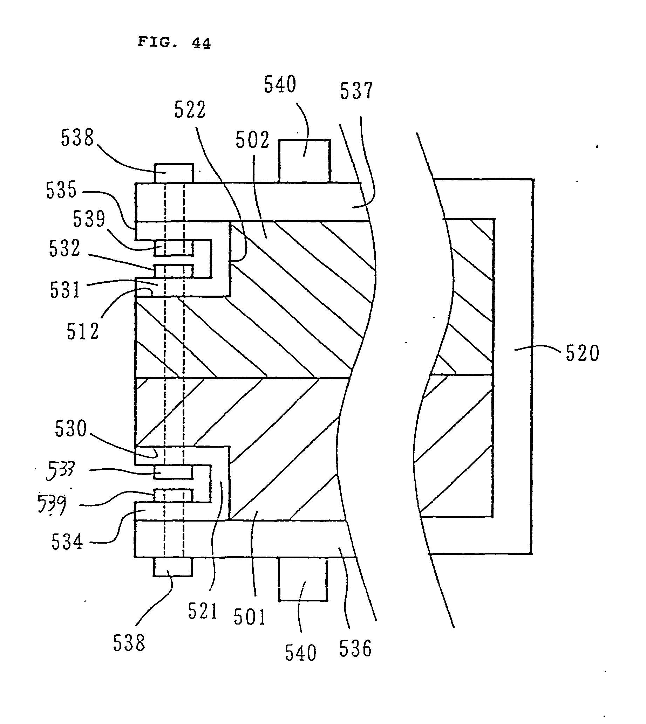

As shown in FIG. 44, each of the upper band left stay 521 and the upper band right stay 522 is channel-shaped. The upper band left stay 521 and the upper band right stay 522 are fitted respectively in left and right recesses 512 in the battery and have portions 530, 531 held in contact with the left and right covers 501, 502 and joined thereto by a bolt 532 and a nut 533. The upper band left stay 521 and the upper band right stay 522 have respective outer portions 534, 535 which have the same height as the upper grooves 510 and are superposed on and coupled to respective free ends of the upper band 520.

The upper band 520 comprises a channel-shaped member whose open side sandwiches, from behind, the battery box 450 composed of the left cover 501 and the right cover 502 combined together. The upper band 520 has straight arms 536, 537 having free ends superposed on the outer portions 534, 535 and coupled thereto by bolts 538 and nuts 539. Outwardly projecting nuts 540 are mounted on the respective arms 536, 537 near their free ends.

The left lower band 523 and the right lower band 524 comprise symmetrical substantially channel-shaped members, and have respective front ends 550, 551 bent into steps so as to enter the recesses 513. One of the front ends 550, 551 has a nut 552, and the other a through hole 553. The front ends 550, 551 sandwich bottoms of the recesses 513 in the left and right covers 501, 502, and a bolt 554 is threaded through the through hole 553 into the nut 552, thereby integrally joining the lower portions of the left and right covers 501, 502.

The left lower band 523 and the right lower band 524 have respective rear ends 555, 556 shaped as vertically long attachments superposed on opposite sides of the battery lock unit cover 525 and secured thereto by screws 557. The battery lock unit cover 525 serves as a member for covering a battery lock unit (not shown), which is of the same structure as with the previous embodiment.

Front and rear nuts 540 which project outwardly are mounted on an intermediate portion of each of the left lower band 523 and the right lower band 524.

The battery box 450 integrally assembled by the joint members 460 is inserted, from above, into the space in the upper frame 470. The right and left nuts 540 on the upper band 520 and the nuts 540 on the left lower band 523 and the right lower band 524 are aligned with the single through holes in the small stays 472 and two of the through holes in the large stay 481, and bolts 541 are threaded inwardly through the through holes into the nuts 540 thereby integrally fastening the battery box 450 to the battery unit frame 440.

The outer cover 431 and the outer cover 432 are placed over opposite sides of the battery box 450 fastened to the battery unit frame 440. As shown in FIG. 45, the outer cover 431 and the outer cover 432 are shaped as if divided horizontally from one piece, and each have two upper and lower attachments 433 at its rear portion. These attachments 433 are fastened to the small stays 480 and the large stays 481 by screws 542. The outer cover 431 and the outer cover 432 have front ends fastened to each other at attachments 434 near their mating surfaces by a bolt 435 and a nut 436.

An upper portion of the inner unit including the upper frame 470 projects from upper ends of the outer cover 431 and the outer cover 432. The cap cover 437, which is substantially C-shaped as viewed in plan and has a pair of arms 438 sandwiching a central space, is placed from above into the upper frame 470 with only the lid 505 exposed from the space. Attachments 438a (FIG. 45) on the arms 438 are coupled to the stays 472 by the bolts 541, so that the upper ends of the left and right covers 501, 502 are covered with the arms 438 of the cap cover 437. In this manner, the battery assembly unit 430 shown in FIG. 46 is completed. The reference numeral 507 in FIG. 46 represents a remaining energy indicator.

The battery assembly unit 430 is placed on the plate 426 extending between the rear frames 424, and the superposing member 484 of the downwardly projecting attachment plate 483 is superposed on the plate 426 in a manner to keep the through holes in alignment. The bolts 429 are threaded through the plate 426 into the nuts 428 on the plates 427 disposed on the lower sides of the rear frames 424, thus supporting the battery assembly unit 430 on the rear frames 424. The attachment bracket 473 is fastened to the seat post 420 with the U-shaped bracket 490 by the bolt 491 and the nut 493, thereby attaching the battery assembly unit 430 to the rear side of the seat post 420.

Therefore, the battery assembly unit 430 is supported in the space behind the seat post 420, and hence can easily and reliably be supported in position. With this arrangement, the battery and the ID card can easily be attached and detached, and the battery assembly unit 430, though surrounded by the firm battery unit frame, is attached in place by a structure which has a pleasing appearance.

## Claims

1. A motor-driven vehicle having a battery lock for locking a detachable battery and a parking lock for preventing the vehicle from moving,
**characterized by** a card reader (60) on a vehicle body for reading information of an ID card (2) previously storing identification information for permitting use of the vehicle, and an electric actuator on the vehicle body for electrically locking and unlocking the battery lock and the parking lock (56) based on the read information, said actuator for the parking lock (56) being energized for only predetermined periods of time.

2. A motor-driven vehicle according to claim 1, **characterized in that** said battery lock and said parking lock (56) are locked manually and unlocked by the electric actuator.

3. A motor-driven vehicle according to claim 1 or 2, **characterized in that** said vehicle comprises a rental vehicle, said ID card (2) being capable of storing rental information.

4. A motor-driven vehicle according to claim 3, **characterized in that** said ID card (2) stores the vehicle No. data of the rental vehicle, ID data, date of use, and time of a rental battery (55).

## Patentansprüche

1. Motorangetriebenes Fahrzeug mit einem Batterieschloss, um eine lösbare Batterie zu verriegeln, und einem Parkschloss, um eine Bewegung des Fahrzeugs zu verhindern,
**gekennzeichnet durch** ein Kartenlesegerät (60) an einem Fahrzeugkörper zum Lesen von Information einer ID-Karte (2), welche zuvor Identifikationsinformation speichert, um eine Verwendung des Fahrzeugs zu erlauben, und einen elektrischen Stellantrieb an dem Fahrzeugkörper, um das Batterieschloss und das Parkschloss (56) basierend auf der gelesenen Information elektrisch zu verriegeln und zu entriegeln, wobei der Stellantrieb für das Parkschloss (56) nur vorbestimmte Zeiträume mit Energie versorgt wird.

2. Motorangetriebenes Fahrzeug gemäß Anspruch 1, **dadurch gekennzeichnet, dass** das Batterieschloss und das Parkschloss (56) manuell verriegelt werden und durch den elektrischen Stellantrieb entriegelt werden.

3. Motorangetriebenes Fahrzeug gemäß Anspruch 1 oder 2, **dadurch gekennzeichnet, dass** das Fahrzeug ein Mietfahrzeug umfasst, wobei die ID-Karte (2) Mietinformation speichern kann.

4. Motorangetriebenes Fahrzeug gemäß Anspruch 3, **dadurch gekennzeichnet, dass** die ID-Karte (2) die Fahrzeugnummerdaten des Mietfahrzeugs, ID-Daten, das Verwendungsdatum und die Zeit einer Mietbatterie (55) speichert.

## Revendications

1. Véhicule à moteur comportant un dispositif de verrouillage de batterie pour verrouiller une batterie amovible et un dispositif de verrouillage de stationnement pour empêcher un déplacement du véhicule,
**caractérisé par** un lecteur de carte (60) sur une carrosserie de véhicule pour lire des informations d'une carte d'identification (2) mémorisant au préalable des informations d'identification pour permettre l'utilisation du véhicule, et un actionneur électrique sur la carrosserie de véhicule pour verrouiller et déverrouiller électriquement le dispositif de verrouillage de batterie et le dispositif de verrouillage de stationnement (56) sur la base des informations lues, ledit actionneur pour le dispositif de verrouillage de stationnement (56) étant alimenté uniquement pendant des périodes de temps prédéterminées.

2. Véhicule à moteur selon la revendication 1, **caractérisé en ce que** ledit dispositif de verrouillage de batterie et ledit dispositif de verrouillage de stationnement (56) sont verrouillés manuellement et déverrouillés par l'actionneur électrique.

3. Véhicule à moteur selon la revendication 1 ou 2, **caractérisé en ce que** ledit véhicule comprend un véhicule de location, ladite carte d'identification (2) étant capable de mémoriser des informations de location.

4. Véhicule à moteur selon la revendication 3, **caractérisé en ce que** ladite carte d'identification (2) mémorise les données de numéro de véhicule du véhicule de location, les données d'identification, la date d'utilisation et le temps d'une batterie de location (55).
